(19) Europäisches Patentamt
European Patent Office
Office européen des brevets

(11) EP 1 182 839 A2

(12) EUROPEAN PATENT APPLICATION

(43) Date of publication:
**27.02.2002 Bulletin 2002/09**

(51) Int Cl.7: **H04L 27/34**, H04L 1/00

(21) Application number: **01119619.3**

(22) Date of filing: **20.08.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.08.2000 JP 2000249447**

(71) Applicant: **Hitachi Kokusai Electric Inc.
Tokyo 164-0003 (JP)**

(72) Inventors:
- **Akiyama, Toshiyuki,
Hitachi Kokusai Electric Inc.
Kodaira-shi, Tokyo 187-8511 (JP)**
- **Kokuryo, Yoshiro, Hitachi Kokusai Electric Inc.
Kodaira-shi, Tokyo 187-8511 (JP)**

(74) Representative: **Altenburg, Udo, Dipl.-Phys.
Patent- und Rechtsanwälte Bardehle -
Pagenberg - Dost - Altenburg - Geissler -
Isenbruck, Galileiplatz 1
81679 München (DE)**

# (54) Convolutionally encoded QAM transmission

(57) A transmission system for transmitting information codes by using a multi-level modulation scheme has a transmitter and a receiver. The transmitter has a divider circuit (20) for dividing inputted N-bit information data stream into M (M is integer not less than 2) data stream; an error correction coding circuit (31, 32, 41, 42) for individually converting the M streams into error correcting code streams so as to deliver M error correcting code streams; a multi-level modulation circuit (50) for making the correspondence between data streams of N bits constituted by the M error correcting code streams and a plurality of signal points arranged on a signal constellation and modulating two carriers with coordinate values of signal points on the signal constellation corresponding to the N-bit code stream; and a high frequency circuit unit (4, 5) for outputting a modulated signal in a radio frequency to a transmission antenna (60).

FIG.2

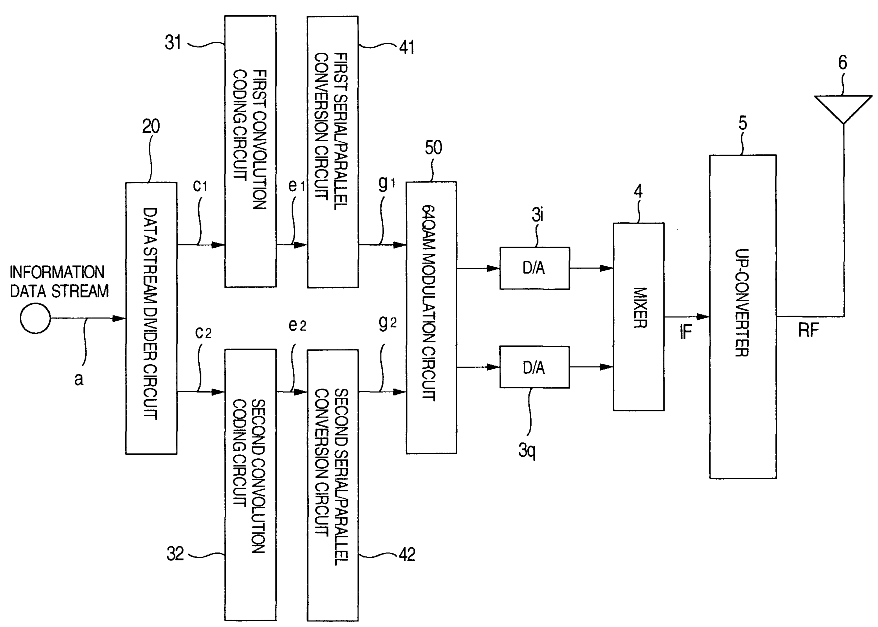


Printed by Jouve, 75001 PARIS (FR)

EP 1 182 839 A2

## Description

BACKGROUND OF THE INVENTION

The present invention relates to an error correction scheme in digital data transmission and more particularly to an error correction coding and decoding scheme operable in a digital multi-level modulation scheme and a transmission system using the scheme.

Conventionally, as a multiplexing transmission system for digital radio communication in mobile systems and terrestrial systems, a digital transmission system based on a multi-level amplitude modulation scheme such as 16QAM (16-level quadrature amplitude modulation) scheme or 64 QAM (64-level quadrature amplitude modulation) scheme immune to path fading and ghost has been put into practice.

Known as decoding circuits for error correction code used in a receiver unit of the digital transmission system are a hard decision decoding circuit that searches a code error position and corrects and decodes a code error on the presupposition that errors take place in all decoded codes in the same probability and a soft decision decoding circuit in which the degree of reliability representative of the certainty of a demodulated code is calculated and a code error is corrected and decoded by using the calculated reliability degree.

Generally, the error correction capability of the latter is higher than that of the former by several of dB and therefore, the latter has been used frequently in recent years. The "reliability degree" used in soft decision decoding or its reciprocal is sometimes termed "weight" or "metric".

For example, in the case of a receiver in a transmission system using a BPSK (Binary Phase Shift Keying) scheme, a soft decision Viterbi decoding circuit using the level of amplitude of received signal as the reliability degree ("ECC device for Viterbi decoder family satellite communications" in catalogue of QUALCOMM-Incorporated) is available.

In a receiver of multi-level modulation scheme using four or more levels, for example, a receiver of 16 QAM scheme having a signal point configuration or arrangement (hereinafter, arranged signal points will be referred to as modulation signal points) as shown in Fig. 19, a soft decision Viterbi decoding circuit is used in which the square of a Euclid distance between a received signal point indicative of a position of a received signal on a signal constellation and a modulation signal point is used as a metric, as described in "Coding Theory" by Hideki Imai, edited by The Institute of Electronic Information Communications, page 288.

Operation of a transmitter based on the multi-level modulation scheme using the conventional soft decision decoding circuit will be described hereunder by using a transmitter of 16 QAM scheme.

The transmitter of 16 QAM scheme has a circuit constructed as shown in Fig. 20 and the receiver of 16 QAM scheme having the conventional soft decision decoding circuit has a circuit constructed as shown in Fig. 21.

Information data stream inputted to the transmitter of Fig. 20 are first supplied to a convolution coding circuit 1 so as to be converted into convolutional codes of 4-bit set and then delivered. The convolution coding circuit can be implemented with a well-known convolution coding circuit, for example, a circuit obtained by modifying a circuit illustrated in Fig. 11.4 on page 252 of the aforementioned "Coding Theory" to make a code rate of 3/4 or a circuit illustrated in Fig. 8-2-10 on page 477 of "Digital Communications (Third Edition)" by John G. Proakis, published by MacGraw-Hill. The code rate referred to herein means a ratio between the number of bits of code before convolution coding and that after convolution coding.

The word consisting of 4-bit set of convolutional code delivered out of the convolution coding circuit 1 is inputted, as a modulation data, to a 16 QAM modulation circuit 2.

In the 16 QAM modulation circuit 2, a signal point corresponding to a word of 4-bit set is selected from 16 signal points on the signal constellation of Fig. 19, as described in general texts.

Then, a value of I component (I-coordinate value) Itxda and a value of Q component (Q coordinate value) Qtxda at the selected signal point are delivered as a modulation signal (Itxda, Qtxda) of 16 QAM modulation scheme.

The components Itxda and Qtxda of the baseband modulation signal delivered out of the 16 QAM modulation circuit 2 are converted into analog signals Itxa and Qtxa, respectively, by means of D/A conversion circuits 3i and 3q and thereafter, the analog signals are inputted to a mixer 4, in which they are operated in accordance with the following expression (1) so as to be converted into an intermediate frequency signal IF subject to quadrature modulation and having an intermediate frequency fm.

$$\mathrm{Itax} \times \cos(2\pi \times \mathrm{fm} \times t) + \mathrm{Qtxa} \times \sin(2\pi \times \mathrm{fm} \times t) \quad (1)$$

where $\cos(2\pi \times \mathrm{fm} \times t)$ and $\sin(2\pi \times \mathrm{fm} \times t)$ are carriers having phases that are orthogonal to each other.

Further, the intermediate frequency signal is converted into a RF signal of higher frequency by means of an up-converter 5 and is then transmitted from an antenna 6.

Now, the RF signal received by a receiving antenna 7 of the receiver of Fig. 21 is converted into an IF signal of intermediate frequency by means of a down-converter 8. The thus obtained IF signal is inputted to a mixer 9. Then, the orthogonality of a trigonometrical function is utilized to cause the IF signal to undergo quadrature demodulation for conversion into I component signal Irxa and Q component signal Qrxa of baseband.

The signals Irxa and Qrxa delivered out of the mixer 9 are converted into digital received baseband signals Ida and Qda by means of A/D conversion circuits 10i and 10q, respectively, and the digital received signals are inputted to a soft decision Viterbi decoding circuit 11 adapted for the 16 QAM scheme.

A synchronous reproduction circuit 12 is adapted to not only reproduce modulation signal point positions on the signal constellation from received signals but also generate a control signal for controlling the clock timing in the receiver. The operating procedure of the synchronous reproduction circuit 12 has no direct relation to the present invention and therefore will not be described.

Incidentally, a signal point (received signal point) position 13' (Ida, Qda) of the baseband received signal inputted to the soft decision Viterbi decoding circuit 11 adapted for the 16 QAM scheme is affected by noise and waveform distortion interfering in the transmission path so as to be displaced for a correct modulation signal point position 13 as shown in Fig. 22.

In the soft decision decoding circuit 11 adapted for 16 QAM scheme, the square of a Euclid distance between a received signal point and a modulation signal point substitutes for the Hamming distance used in the soft decision Viterbi decoding circuit and is used as a metric to calculate a path metric of each trellis, as described in ordinary texts, for example, in chapter 12 of the aforementioned "Coding Theory". The smaller the value of the calculated path metric, the more each received signal becomes close to the signal point arranged on the signal constellation, indicating that the reliability is higher.

Accordingly, a code of a path having a minimal path metric value is delivered out of the soft decision Viterbi decoding circuit 11 as a decoded information data stream corrected for code error.

As described above, in the receivers of 16 QAM scheme representing one of the receivers of multi-level modulation scheme using four or more level, a receiver using the soft decision convolution code decoding having the higher code error correcting capability than that of the hard decision convolution code decoding can also be constructed.

Recently, a trellis coded modulation scheme of more higher correction capability has been proposed as the error correction coding and decoding scheme and eventually, dedicated IC chips have been commercialized which are employed to apply the trellis coded modulation scheme to a modulation scheme applicable to a demodulation scheme using differential detection having signal points are arranged on a circumference as shown in Fig. 23.

The trellis coded modulation scheme is detailed in the following literatures and will not be described herein.

(1) "A Pragmatic Approach to Trellis-Coded Modulation" by Andrew J. Viterbi, Jack K. Wolf, Ephraim Zehavi and Roberto Padovani: IEEE COMMU. Vol. 27, No.7, 1989
(2) "Guide to Coding Theory" by Yoshihiro Iwatare, Shohkohdoh, pp.180-187
(3) "Digital Communications (Third Edition)" by John G. Proakis: McGraw-Hill, pp.511-526.

Incidentally, the LSI circuit for soft decision Viterbi decoding adapted for the BPSK scheme has already been commercialized and can be bought at a relatively low price. But, LSI circuits for soft decision Viterbi decoding adapted for the multi-level modulation scheme using four or more levels have not been commercialized yet. In connection with the trellis coded modulation scheme, the LSI circuit exclusively applicable to the modulation scheme using differential detection having the modulation signal point arrangement as shown in Fig. 23 has been commercialized but any LSI circuit exclusively applicable to the modulation scheme using synchronous detection having the modulation signal point arrangement as shown in Fig. 19 has not yet been commercialized.

Under the circumstances, when the soft decision Viterbi decoding is practiced with the multi-level modulation scheme having four or more levels or the trellis coded modulation scheme is used, it is necessary at present to design and make a dedicated LSI circuit. But, long time and high costs are required for developing the LSI circuit, raising a first problem that in the case of products manufactured at a small yield, the performance of the receiver can be promoted only at the cost of an extremely high product price.

## SUMMARY OF THE INVENTION

Conceivably, the following scheme can be considered as an error correcting coding scheme being similar to the trellis coded modulation scheme and taking the modulation signal point arrangement into account. For example, in the 16 QAM modulation scheme, the information data stream to be transmitted is divided every 3 bits. Then, one bit of the each 3-bit piece is converted into an error correcting code having a bit length of n=2 bits by means of the 1/2 code rate convolution coding circuit and a data (word) of (n+m)=4 bits obtained by adding the 2-bit coded and the remaining m=2 bits is caused to make correspondence with a signal point on the signal constellation as shown in Fig.

24 so as to provide a modulation signal of 16 QAM from I,Q coordinates of the signal point.

The correspondence between the signal point arranged on the signal constellation and the word in Fig. 24 is determined pursuant to the following rule. Of the n=2 bits, the upper bit is used as a bit for discriminating signal points that are adjacent in the I-axis direction and the lower bit is used as a bit for discriminating signal points that are adjacent in the Q-axis direction. For example, a signal point assigned with a word of n="10" and a signal point assigned with a word of n="00" are adjacent to each other in the I-axis direction and similarly, a signal point assigned with a word of n="11" and a signal point assigned with a word of n="01" are adjacent to each other in the I-axis direction. Further, for example, a signal point assigned with a word of n="10" and a signal point assigned with a word of n="11" are adjacent to each other in the Q-axis direction and a signal point assigned with a word of n="00" and a signal point assigned with a word of n="01" are adjacent to each other in the Q-axis direction. Further, the word of m=2bits indicates which one of four quadrants constituting the I-Q coordinates the signal point exists in. In other words, a signal point assigned with a word of m="10" exists in the first quadrant, a signal point assigned with a word of m="11" exists in the second quadrant, a signal point assigned with a word of m="01" exists in the third quadrant and a signal point assigned with a word of m="00" exists in the fourth quadrant.

In this scheme, the information data of 3 bits is converted into a coded data of 4 bits and then transmitted, indicating that the information data is effectively converted into an error correction code of 3/4 code rate and then transmitted.

In decoding, an error of decision between the most adjacent modulation signal points is corrected for error by a convolutional code of 1/2 code rate. As a result, a transmission system having a higher transmission rate than that in the case where all information data are coded to 1/2 code rate convolutional code and then transmitted can advantageously be obtained, while keeping the high error correcting capability comparable to that in the case where all information data to be transmitted are converted into 1/2 code rate convolutional code and then transmitted.

In the scheme as above, however, the data of m bits is transmitted without being converted into the error correction code, with the result that an error occurring in the m bits cannot be corrected. Consequently, it poses a second problem that for example, when the radio wave is interrupted instantaneously in the shade of a building in mobile radio communication, a code error remains and the scheme of interest is difficult to use in the mobile radio communication.

Further, in that scheme, one-bit information data of the respective divided 3-bit information data is converted into the error correction coded data of 2 bits so as to be used as the word of 2-bit for discriminating the most adjacent signal points in the I-axis direction and the most adjacent signal points in the Q-axis direction and therefore, if the communication apparatus is fixed to the modulation scheme such as 16 QAM, the information transmission rate is uniformly determined. As a result, there arises a third problem that flexible dealing operations, such as increasing the code rate of the error correction to increase the transmission rate under the condition that the line is placed in good condition and the code error is difficult to occur and decreasing the code rate in mobile communication to strengthen the error correcting capability, cannot be taken.

The present invention intends to solve the above problems and it is an object of the invention to provide a high-performance and easy-to-handle transmission system that uses, without resort to development of new dedicated LSI circuit, an LSI circuit for soft decision Viterbi decoding adapted for BPSK scheme commercially available at a relatively low price so as to be based on an error correction coding scheme taking the signal point arrangement similarly to the trellis coded modulation scheme and has the high code error correcting capability to ensure code error correction even in the event of instantaneous interruption of the radio wave and to enable the code rate of error correction code to be changed flexibly in accordance with a change in transmission path conditions.

More specifically, the present invention intends to provide, without resort any special expensive dedicated circuits, a transmission system that can provide an error correction code of low code rate when the information data transmission of high code error correcting capability is required as in the case of the mobile communication and can provide an error correction code for increasing the transmission rate by increasing the code rate when the efficient information data transmission at a high transmission rate is required.

According to the invention, to accomplish the above object, in a transmission system of multi-level modulation scheme in which a word of a predetermined bit length (N bits) are allotted to a plurality of signal points set on a signal constellation, two carriers orthogonal to each other are modulated with coordinate values of the signal points and a modulated signal is transmitted, the N-bit word is once divided into data (words) of a predetermined bit length of 2 or more, each of the divided words is assigned to a code converted into an individual error correction code, and thereafter, modulation with the N-bit word obtained by assigning the error correction codes is carried out in accordance with the arrangement of the signal points on the signal constellation.

A transmission system for transmitting information data stream by using a multi-level modulation scheme comprises a transmitter and a receiver for receiving transmission signals from the transmitter, the transmitter includes a divider circuit for inputting information data stream and dividing the information data stream into M (M being integer not less than 2) data streams; an error correction coding circuit for individually converting the M (M being integer not less than 2) data streams into error correcting coded data streams so as to deliver M error correcting coded data streams; a multi-level modulation circuit for making correspondence between a data stream of N bits (N being integer not less than 2) constituted by the M error correcting coded data streams and a plurality of signal points arranged on a signal constellation and modulating two carriers orthogonal with each other with coordinate values of signal points on the signal constellation corresponding to the N-bit coded data stream; and a high frequency circuit unit for converting a modulated signal delivered out of the multi-level modulation circuit into a radio frequency and delivering it to a transmission antenna.

In a transmitter of the transmission system according to an embodiment of the invention, the divider circuit divides the inputted information data stream into first and second data streams, the error correction coding circuit includes a first error correction coding circuit for converting the first data stream into a first error correcting code sequence, a first serial/parallel conversion circuit for rearranging the first error correcting coded data stream to a word of n bits (n being integer not less than 2) and delivering a first word stream, a second error correction coding circuit for converting the second data stream into a second error correcting coded data stream, and a second serial/parallel conversion circuit for rearranging the second error correcting coded data stream to a word of m bits (m being integer not less than 2) and delivering a second word stream, and the multi-level modulation circuit is based on a multi-level signal modulation scheme in which words of (m+n) bits are made to correspond to $2^{(m+n)}$ signal points arranged on the signal constellation, the word of (m+n) bits are multi-level signals including word of n bits, of which at least one bit has a code value different from that of the other between the most adjacent signal points, and the remaining word of m bits and the multi-level signals are modulated, whereby two carriers orthogonal with each other are modulated with coordinate component values of signal points on the signal constellation corresponding to the word of (m+n) bits constituted by n bits of the first word stream and m bits of the second word stream and the modulated two carriers are synthesized to deliver a modulated signal to the high frequency circuit unit.

Further, the multi-level modulation circuit in the transmission system according to an embodiment of the invention forms the multi-level signal based on $2^{(m+n)}$ -QAM modulation scheme as will be described below. $2^{(m+n)}$ signal points constituted by an arrangement of $2^m$ blocks each having $2^n$ signal points are arranged arranged on the signal constellation. In each block, $2^m$ different codes of m bits and $2^n$ different words of n bits are assigned to $2^{(m+n)}$ signal points in gray code configuration, the m-bit words specify a block to which signal points the words correspond to belong and the n-bit words specify positions in the block to which the signal points the words correspond to belong, and words of (m+n) bits obtained by combining the m-bit words and the n-bit wirds are assigned to the $2^{(m+n)}$ signal points on the signal constellation.

In other words, two convolution coding circuits of different code rates are provided and the information data stream are divided into two so as to be converted into error correction coded data of different code rates. Then, the modulation codes are arranged in such a manner that the error correcting code of low code rate and high error correcting capability is used as code bits for discriminating the most adjacent modulation signal points on the signal constellation.

Through this, of the modulation data of (n+m) bits made to correspond to the individual $2^{(n+m)}$ modulation signal points defined in advance on the signal constellation, the correcting coded data of low code rate and high error correcting capability are assigned to the bits adapted to discriminate the most adjacent modulation signal points and being the most liable to suffer from a code error and the error correcting coded data of high code rate and low error correcting capability but high transmission rate are assigned to the remaining bits being unapt to suffer from a code error.

Namely, this modulation code arrangement personates the code arrangement taking the modulation signal points into account similarly to the trellis coded modulation scheme.

With this code arrangement, a transmission system can be realized in which for all information data, the error correcting code having the low transmission rate but high error correcting capability as usually, that is, the low code error rate comparable to that when the error correcting code having the low code rate is used can be realized and besides the high transmission rate can be obtained. Further, since the easily available and inexpensive LSI circuit can be utilized, a compact and inexpensive transmitter unit can be realized. Further, all bit data are converted into error correcting coded data and then transmitted and hence, a transmission system can be realized in which even when the radio wave is instantaneously interrupted in, for example, the mobile radio communication, any code error can be corrected.

In addition, by using the convolutional bits that can be changed in code rate easily by using punctured codes for the two error correcting coding circuits, a transmission system capable of changing the code rate flexibly in accordance with the line conditions can be realized.

Accordingly, the easy-to-handle and high-performance transmission system can be obtained which can be used even in the mobile radio communication required of high correcting capability and besides a high transmission rate and which can change the code rate in accordance with the transmission path conditions.

Furthermore, when the Reed Solomon code is used as the outer codes, codes liable to suffer from errors can be collected to one word and the correcting capability based on decoding of the Reed Solomon codes can be fully fulfilled to advantage.

BRIEF DESCRIPTION OF THE DRAWINGS

Fig. 1 is a block diagram showing the circuit construction of a receiver of a first embodiment of a transmission system according to the invention.
Fig. 2 is a block diagram showing the circuit construction of a transmitter in the first embodiment.
Fig. 3 is a schematic diagram for explaining a signal processing in the first embodiment.
Fig. 4 is a block diagram showing the circuit construction of a code sequence divider circuit according to the invention.
Fig. 5 is a block diagram showing the circuit construction of a first serial/parallel conversion circuit according to the invention.
Fig. 6 is a schematic diagram showing the arrangement of modulation signal points and modulation codes in the first embodiment.
Fig. 7 is a schematic diagram for explaining a signal process practiced with a first signal point position deciding circuit.
Fig. 8 is a schematic diagram for explaining a signal process practiced with a second signal point position deciding circuit.
Fig. 9 is a schematic diagram for explaining a second embodiment of a metric calculating process according to the invention.
Fig. 10 is a block diagram showing the circuit construction of a transmitter of a second embodiment of the transmission system according to the invention.
Fig. 11 is a block diagram showing the circuit construction of a receiver in the second embodiment of the transmission system.
Fig. 12 is a block diagram showing the circuit construction of a transmitter of a third embodiment of the transmission system according to the invention.
Fig. 13 is a block diagram showing the circuit construction of a receiver in the third embodiment.
Fig. 14 is a schematic diagram for explaining problems encountered in the signal process in the third embodiment.
Fig. 15 is a schematic diagram for explaining a first signal processing method in the third embodiment.
Fig. 16 is a schematic diagram for explaining a second signal processing method in the third embodiment.
Fig. 17 is a schematic diagram showing another example of arrangement of modulation codes.
Fig. 18 is a schematic diagram for explaining the effect of the modulation code arrangement of Fig. 17.
Fig. 19 a schematic diagram for explaining a conventional example of the arrangement of modulation signal points and modulation data.
Fig. 20 is a block diagram showing the circuit construction of a conventional transmitter of 16 QAM modulation scheme.
Fig. 21 is a block diagram showing the circuit construction of a conventional receiver of 16 QAM modulation scheme.
Fig. 22 is a schematic diagram for explaining a displacement of a received signal point in the conventional transmission system.
Fig. 23 is a schematic diagram for explaining a trellis coded modulation scheme.
Fig. 24 is a schematic diagram showing the arrangement of modulation signal points and modulation data taking the modulation signal point arrangement into account.

DESCRIPTION OF THE EMBODIMENTS

Referring now to Figs. 1 and 2, a first embodiment of a transmission system according to the invention will be described. The circuit construction of a transmitter of the transmission system is illustrated in Fig. 2 and an example of the circuit construction of a receiver of the transmission system is illustrated in Fig. 1. For convenience of explanation, the following description will be given by way of a transmitter in which modulation based on 64 QAM is carried out but obviously, the present invention can be applicable to various modulation schemes such as 16 QAM, 32 QAM, 64 QAM, 128 QAM, 256 QAM, ····· $2^{(m+n)}$ QAM.

Information data stream inputted to the transmitter of Fig. 2 are first supplied to a data stream divider circuit 20 so as to be divided into two information data streams of a first information data stream and a second information data stream. An example of the internal construction of the data stream divider circuit 20 is illustrated in Fig. 4 and information codes at individual parts are schematically illustrated in Fig. 3.

The information codes inputted to the code sequence divider circuit 20, as designated at (a) in Fig. 3, are divided into two information data streams designated at (b1) and (b2) in Fig. 3 by means of a switch 21 and the two information data streams are once stored in a first FIFO (First In First Out) memory 22 and a second FIFO memory 23, respectively.

The duration between times t1 and t2 corresponds to one period of repetition of a switching pattern and at the expiration of the duration, the switch operates to repeat the same switching pattern. Numerals given in rectangular frames at (a) to (c) in Fig. 3 are bit numbers indicative of time sequence of the information data stream sequentially inputted on time series base. Numerals in the data frames at (a) to (c2) in Fig. 3 and numerals in data frames at (d1) to (g1) do not indicate the same data even when they are identical to each other. Signs "-4", "-2" and "0" indicate data preceding data "1". In other words, "0" indicates a data one preceding "1", "-2" indicates a data three preceding the data "1".

The information data stored in the first and second FIFO memories 22 and 23 are read out of these memories, respectively, as information data of first and second information data stream as shown at (c1) and (c2) in Fig. 3 by using a clock $CK_1$ of a frequency lower than a clock $CK_0$ for the information data inputted to the code data stream divider circuit 20. How to deal with a time interval 24 during which no code takes place, as shown at (c1) in Fig. 3, will be described later.

In Fig. 2, the first information data c1 delivered out of the data stream divider circuit 20 is inputted to a first convolution coding circuit 31 so as to be converted into convolutional codes of a code rate of 1/2 and thereafter, the converted convolutional code data are applied with punctured code data as shown at (d1) in Fig. 3 so as to be converted into first convolutional code data of a code rate of 2/3 which in turn are delivered as a first error correcting code data e1. In Fig. 3, rectangular frames applied with a dot pattern show that bit values in these frames represent error correcting code data and internal numerals represent bit numbers. Further, x sign represents a bit position of a punctured bit.

The first error correcting code data e1 delivered out of the first convolution coding circuit 31 in Fig. 2 is inputted to a first serial/parallel conversion circuit 41, in which it is rearranged in a word unit of 2 bits per word and is thereafter once stored in a FIFO memory of the conversion circuit.

An example of the internal circuit construction of the first serial/parallel conversion circuit 41 is illustrated in Fig. 5.

The first error correcting code data d1, which has been applied with punctured bit by means of the first convolution coding circuit 31 and rearranged to a serial bit streams as shown at (e1) in Fig. 3, is inputted to a switch circuit 43 shown in Fig. 5 so as to be rearranged to a parallel code sequence in a word unit of 2 bits per word in the case of n=2 as shown at (f1) in Fig. 3.

Then, in a bit interleave circuit 44, codes of lower bits are 3 bits delayed with respect to streams of upper bits and then the resulting lower and upper bits are once stored as a first word data in a FIFO memory 45. An element indicated by a square block in each of the switch circuit 43 and bit interleave circuit 44 is a one-bit register.

In this phase, the first error correcting code coded data stream e1 sent from the first convolution coding circuit 31 to the first serial/parallel conversion circuit 41 need not always be the coded data stream rearranged to the serial coded data stream as shown at (e1) in Fig. 3. The convolutional codes of 2 bits per word with the punctured bits as shown at (d1) in Fig. 3 can be sent as it is. In an alternative, the first convolution coding circuit 31 and the first serial/parallel conversion circuit 41 may be formed integrally in order that the convolutional coded data stream applied with punctured bits as shown at (d1) in Fig. 3 can be rearranged directly as shown at (f1) and then stored in the FIFO memory 45 through the bit interleave circuit 44.

Similarly, the second information data stream c2 delivered out of the data stream divider circuit 20 in Fig. 2 is inputted to a second convolution coding circuit 32 so as to be converted into convolutional coded data of a code rate of 1/2 and thereafter, applied with punctured bits as shown at (d2) in Fig. 3 so as to be converted into convolutional coded data stream of a code rate of 7/8 and then delivered as a second error correcting coded data stream. This second error correcting coded data stream is inputted, as second error correcting coded data stream e2, to a second serial/parallel conversion circuit 42.

As shown at (f2) in Fig. 3, the second error correcting coded data stream e2 is then rearranged in a word unit of 4 bits per word by means of the second serial/parallel conversion circuit 42 and is once stored, as a second word data stream, in a FIFO memory inside the second serial/parallel conversion circuit 42.

As an example, the circuit of Fig. 5 may simply be so modified as to be adapted for 4 bits and used as the second serial/parallel conversion circuit 42. In the present embodiment, however, for the convenience of illustration of (g2) in Fig. 3, the second serial/parallel conversion circuit 42 will be described as being a circuit not applied with the bit interleave. As in the case of the first serial/parallel conversion circuit 41, the second error correcting coded data stream sent from the second convolution coding circuit 32 to the second serial/parallel conversion circuit 42 is not always required to be the coded data stream that is rearranged to the serial coded data stream as shown at (e2) in Fig. 3.

Codes in the first word stream of 2 bits per word stored in the FIFO memory inside the first serial/parallel conversion circuit 41 of Fig. 2 and codes in the second word stream of 4 bits per word stored in the FIFO memory inside the second serial/parallel conversion circuit 42 in the manner described as above are read concurrently word by word as shown at (g1) and (g2) in Fig. 3 by a symbol clock CK2 of a modulation signal and are inputted to a 64 QAM modulation circuit 50.

In the 64 QAM modulation circuit 50, word stream of 6 bits corresponding to individual $2^{(n+m)} = 2^6 = 64$ signal points defined in advance on an I-Q signal constellation are each divided into 2 bits for n= 2 and 4 bits for m=4 and then arranged as shown in Fig. 6.

In the code arrangement, between the most adjacent signal points, an upper bit or a lower bit of the 2-bit word for n= 2 of one signal point differs from that of the other without fail, thus providing a so-called gray code arrangement.

In Fig. 6, each bock enclosed with thin dotted chain line and consisting of four signal points has the same 4-bit value for common m=4. Further, the values in these blocks are related to each other in the gray code relationship. In other words, 4-bit values for m=4 in adjacent blocks are related to each other to have a different value at only one bit.

Of the first and second word stream inputted to the 64 QAM modulation circuit 50, 2 bits of the first word stream are allotted to 2 bits for n=2 and 4 bits of the second word stream are allotted to 4 bits for m=4 and then the first and second word streams are modulated.

Similarly to the transmitter in the conventional transmission system, an I component value Itxda and a Q component value Qtxda of a selected modulation signal point are delivered out of the 64 QAM modulation circuit 50 as a modulation signal based on the 64 QAM modulation scheme. Two carriers orthogonal with each other modulated with the modulation signal in D/A conversion circuits 3i and 3q and a mixer 4 are transmitted from an antenna 6 through an up-converter 5.

In the receiver of the transmission system of the present embodiment, the circuit ranging from the antenna 7 to A/D conversion circuits 10i and 10q simply carries out the same signal process in the Fig. 21 receiver of the conventional transmission system and therefore, this circuit portion is omitted in the circuit diagram of the Fig. 1 receiver of the present embodiment.

Received signals converted into digital signals by the A/D conversion circuits 10i and 10q are first inputted to a received signal point calculating circuit 60 so as to be applied with correction for amplitude level and phase rotation angle on the basis of a reference signal reproduced by a synchronous reproduction circuit 12.

Then, signal point coordinate values of received signals on a signal constellation (received signal point coordinate values) are calculated and delivered so as to be inputted to a first signal point position deciding circuit 71 and a second delay circuit 82.

In the first signal point position deciding circuit 71, a signal point closest to an inputted received signal point coordinate value represented by, for example, a coordinate value of a received signal point position at × sign on the signal constellation in Fig. 7, that is, a signal point corresponding to a code [0000;11] is calculated and a value [11] of 2 bits for n=2 in this word is delivered as one word of the received first word stream containing a code error caused under the influence of, for example, noise.

Thereafter, the code error contained in the received first word stream is corrected and decoded by a first error correction decoding circuit 101. The received first word stream has a structure applied with the bit interleave process as shown at (g1) in Fig. 3.

Thus, the received first word stream is first inputted to a first parallel/serial conversion circuit 91, in which the bit interleave is returned in accordance with the procedure inverse to the that carried out with the first serial/parallel conversion circuit 41 so as to provide a converted state as shown at (f1) in Fig. 3.

Subsequently, it is further returned to a serial received first error correcting coded data stream as shown at (e1) in Fig. 3 and then supplied to the first error correction decoding circuit 101.

In the first error correction decoding circuit 101, the coded data are further changed to a coded data stream as shown at (d1) in Fig. 3 by taking punctured bits into account, then decoded by using the LSI circuit for Viterbi decoding adapted for the ordinary BPSK scheme and delivered as a received first information data stream corrected for the code error.

As in the case of the first serial/parallel conversion circuit 41, the received first error correcting coded data stream sent from the first parallel/serial conversion circuit 91 to the first error correction decoding circuit 101 is not always required to be the data stream shown at (e1) in Fig. 3 that is rearranged to the serial data stream.

Incidentally, when the first error correction decoding circuit 101 is required to carry out the code error correction and subsequent decoding, this implies that an error occurs in the received first error correcting coded data stream inputted to the first error correction decoding circuit 101 or the modulation signal point position selected by the first signal point position deciding circuit 71 in the further preceding step is erroneously decided.

In the event that the selection of the modulation signal point position is erroneous, an error also occurs in the code value of 4 bits for m=4 to degrade the error correcting capability.

This problem can be eliminated by correcting and decoding the code error to obtain a correct received first coded data stream, counting back a correct received first word stream from the correct received first coded data stream, re-selecting a correct modulation signal point by using the received first word stream obtained through the count back, and calculating a data value of 4 bits for m=4.

First convolution coding circuit 111 and first serial/parallel conversion circuit 121 on the receiving side constitute a circuit for counting back a correct, received first word stream and this circuit carries out the same signal process as that practiced by the first convolution coding circuit 31 and first serial/parallel conversion circuit 41 shown in Fig. 2.

Namely, the received first coded data stream decoded by the first error correction decoding circuit 101 is converted into a received first error correcting coded data stream by the first convolution coding circuit 111 on the receiving side and thereafter supplied to the first serial/parallel conversion circuit 121 on the receiving side.

Then, it is converted into a received first word stream removed of a code error and subsequently inputted to a second signal point position deciding circuit 72.

On the other hand, the received signal point coordinate value calculated in the received signal point calculating circuit 60 is inputted to a second signal point deciding circuit 72 via the second delay circuit 82.

The second delay circuit 82 is adapted to adjust the timing such that, in synchronism with the code timing of a symbol word stream of the received first word stream, a received signal point coordinate value of the same symbol is inputted to the second signal point position deciding circuit 72.

In the second signal point position deciding circuit 72, a plurality of modulation signal points having word of 2 bits for n=2 in the inputted received first word stream are taken out of the signal points on the signal constellation of Fig. 6.

Then, from the plurality of taken out signal points, a modulation signal point closest to coordinate values of received signal points of the same symbol inputted concurrently is selected and a code of 4 bits for m=4 of a code corresponding to the selected signal point is calculated and delivered as a coded data of the received second word stream.

For example, it is now assumed that in the first signal point position deciding circuit 71, the received signal point at × sign coordinates 14 on the signal constellation in Fig. 7 is detected and a value [11] of 2 bits for n=2 is calculated as a coded data at the signal point but the coded data is calculated erroneously and a value of 2 bits for n=2 in the received first word stream that is corrected for the error is [01].

In this case, from the modulation signal points in Fig. 6, 16 signal points in total indicated in a square frame of Fig. 8 that have the value [01] of 2 bits for n=2 are selected.

Then, from the thus selected signal points, a modulation signal point closest to the received signal point at × sign 14, that is, a hatched signal point having a modulation code of [0100;01] is selected and its code of 4 bits for m=4 that is [0100] is delivered as a correct code of one word in the received second word sequence.

Incidentally, in the mobile radio communication, the level of the received signal is decreased abnormally excessively by fading and the communication is sometimes affected by noise to a great extent.

For example, when a modulation signal point actually used for modulation in the transmitter is a signal point of modulation code [0110;01] at square sign 15 in Fig. 8, the 2-bit signal for n=2 is not erroneous but an error still remains in the code of 4 bits for m=4. In the event that the radio wave is instantaneously interrupted, a similar phenomenon takes place. Accordingly, following completion of correction of 2 bits for n=2, the error in m=4 bits must further be corrected.

Thus, in the present embodiment, a further correction is made to the received second word sequence calculated by the second signal point position deciding circuit 72 to correct the code error.

More particularly, the received second word stream delivered out of the second signal point position deciding circuit 72 is inputted to a second parallel/serial conversion circuit 92 to cause it to practice the procedure inverse to that carried out in the second serial/parallel conversion circuit.

Then, the received second word stream shown at (g2) in Fig. 3 is converted into the received second error correcting coded data stream at (e2) which in turn is delivered.

The received second error correcting coded data stream is further inputted to a second error correction decoding circuit 102 so as to be converted into a coded data stream as shown at (d2) in Fig. 3 taking punctured bits into account and thereafter decoded by using the LSI circuit for Viterbi decoding adapted for the ordinary BPSK scheme so as to be delivered as a received second information data stream consisting of data corrected for the code error.

The internal circuit construction of a data stream combining circuit 130 is symmetrical to that of Fig. 4 so that the received second information data stream delivered out of the second error correction decoding circuit 102 may once be stored in a second FIFO memory inside the information data stream combining circuit 130. The received first information data stream decoded by the first error correction decoding circuit 101 is delayed by a first delay circuit 81 so as to be adjusted to the output timing of the received second code sequence and thereafter, is also once stored in a first FIFO memory inside the information data stream combining circuit 130.

Here, by setting the storage capacity of the first FIFO memory to a sufficiently large value, the first FIFO memory can also fill the role of the first delay circuit 81.

In the information data stream combining circuit 130, codes at (c1) and (c2) in Fig. 3 stored in the first and second FIFO memories are sequentially read at the timing for (b1) and (b2) while being combined with each other, so that the transmitted information data stream at (a) in Fig. 3 can be reproduced and delivered.

As will be seen from the above, in the method according to the present embodiment, the code of bits (n=2) that discriminate the most adjacent modulation signal points and are affected by noise to undergo code errors frequently is coded with the error code correcting code of the high error correcting capability, for example, having a code rate of 2/3 and transmitted; and conversely, the code of other bits (m=4) unapt to undergo code errors is coded with the error correcting code of the low error correcting capability but of a high transmission rate, for example, having a code rate of 7/8 and transmitted.

Accordingly, a transmission system can be obtained which can have a higher transmission rate than that of the ordinary transmission system while having a low code error rate comparable to that in the ordinary transmission system for coding all information data stream with the error correcting code of the high error correcting capability and the 2/3 code rate and a characteristic of high performance.

In the method according to the present embodiment, a correct data of 2 bits for n=2 decoded with the error correcting code of the high error correcting capability is used to again select a correct modulation signal point and the remaining data of 4 bits for m=4 is calculated, with the result that the distance between signal points for the datas of 4 bits for m=4 is substantially the same as that in the case of 16 QAM and from the collective viewpoint, the transmission system having the code error rate lower than that in the ordinary transmission system for coding all information data stream with the error correcting code of the 2/3 code rate and the high-performance characteristic can be obtained.

Since the error correction decoding is carried out for the data of 4 bits for m=4 to correct the code error, a transmission system can be obtained which is usable even for the mobile radio communication in which the possibility of generating instantaneous interruption of the radio wave is high.

Further, though resembling, in structure, the trellis coded modulation scheme that takes the modulation signal point arrangement into account, the error correcting structure does not need the expensive, special and dedicated LSI in the trellis coded modulation scheme and can be realized with the relatively inexpensive and commercially available LSI such as the LSI for soft decision Viterbi decoding adapted for BPSK scheme, thereby ensuring that the transmission system can be constructed at low costs to advantage.

In addition, in the method according to the present embodiment, such a constraint that each bit of the error correcting code of 1/2 code rate is assigned to the I axis and Q axis is not necessary and therefore, the code rate of the error correcting code used for 2 bits for n=2 and 4 bits for m=4 can be set arbitrarily.

Accordingly, a high-performance and easy-to-operate transmission system can be obtained in which the code rate of the error correcting code can be changed flexibly in accordance with a change in transmission path conditions.

As described above, in the method according to the present embodiment, the relatively inexpensive and commercially available LSI for soft decision Viterbi decoding adapted for the BPSK scheme can be used without newly developing LSI circuits. In other words, the high-performance and easy-to-handle transmission system based on the error correction coding scheme taking the modulation signal point arrangement into account similarly to the trellis coded modulation scheme can be obtained, having the high code error correcting capability, enabling the code error to be corrected even in the event of an instantaneous interruption of the radio wave and enabling the code rate of the error correcting code to be changed flexibly in accordance with a change in the transmission path conditions.

Next, a second embodiment of the metric calculating method will be detailed. In the present embodiment, a soft decision decoding circuit is used as the error correction decoding circuit to further promote the error correcting capability.

The circuit construction of the transmitter is the same as that in Fig. 2 and the fundamental circuit construction of the receiver is also the same as that in Fig. 1. The present embodiment differs in that an LSI circuit for soft decision Viterbi decoding adapted for the BPSK scheme is used for the first error correction decoding circuit 101 and second error correction decoding circuit 102 of the receiver in Fig. 1. The method for soft decision Viterbi decoding is a well-known method and therefore only a method of calculating metrics used in soft decision will be described.

Incidentally, in the ordinary soft decision Viterbi decoding, the square of a Euclid distance between a received signal point and a modulation signal point is always used regardless of the position of the received signal point to calculate a path metric of each trellis, as described in the aforementioned "Coding Theory", chapter 12.

In contrast therewith, in the method of the present embodiment, the method for calculation of metrics is changed in accordance with the position of a received signal point on the signal constellation.

Referring to Fig. 9, the arrangement of modulation signal points near the origin in the first quadrant in Fig. 6 is exaggeratedly illustrated.

Firstly, calculation of a metric in case the received signal point is positioned at × sign 16 in Fig. 9.

It is assumed in Fig. 9 that when, of 2 bits for n=2 at a signal point 16L on the left of the received signal point at x sign 16, the upper bit for discriminating the modulation signal point in the I-axis direction has a value of "0" and for a signal point 16R on the right, the upper bit has a value of "1", the value of metric corresponding to the most left coordinate position (signal point 16L) is [000], the value of metric corresponding to the most right coordinate position (signal point 16R) is [111] and metric values corresponding to intermediate coordinate positions are sequentially and equi-distantly defined as [001], [010], [011], [100], [101] and [110] from left to right. These metric values are set in a memory 17 for setting metrics in correspondence with the coordinate positions.

Accordingly, as a metric value of that upper bit at the received signal point at × sign 16, [101] corresponding to its coordinate position is used.

Next, a value of metric when the received signal point is positioned at × sign 18 in Fig. 9 is calculated as will be described below.

It is assumed in Fig. 9 that when, of 2 bits for n=2 of a signal point 18R on the right, the upper bit has a value of "0" contrary to the above and the upper bit of a signal point 18L on the left has a value of "1", a metric value corresponding to the most right coordinate position (signal point 18R) is [000], a metric value corresponding to the most left coordinate position (signal point 18L) is [111] and metric values corresponding to intermediate coordinate positions are sequentially defined as [001], [010], [011], [100], [101] and [110] from right to left. These metric values are set in a memory 17' for setting metrics in correspondence with the coordinate positions.

Accordingly, as a metric value of the upper bit at the receiving point at × sign 18, [010] corresponding to its coordinate position is used.

Of 2 bits for n=2 at the received signal point, metric values of the lower bit for discriminating the signal point in the Q-axis direction are also set as [000] [001] ····· [111] or [111] [110] ····· [000] from above to below so as to be used in accordance with the value of lower bit of the signal point above or below the received signal point and the individual metric values are stored in the corresponding memories.

Since the soft decision code error correcting capability for the word stream of 2 bits for n=2 is very high, soft decision is not always necessary for the remaining word stream of 4 bits for m=4. For example, the hard decision Viterbi decoding circuit is used for the word stream of 4 bits for m=4, the circuit scale can be reduced as compared to the soft decision Viterbi decoding circuit.

With a view to further promoting the error correcting capability, however, soft decision error correction decoding can be carried out for 4 bits for m=4 as will be described below.

Firstly, when as shown at the position of × sign 16, any of the most adjacent four signal points can be selected to provide a value of [0000] of 4-bit code for m=4 without causing an error in the code, a metric value for indicating the highest reliability degree for all 4 bits for m=4 is used. For example, when the code value of this bit is "0", a metric value [000] is used but when the code value of this bit is "1", a metric value [111] is used.

On the other hand, when the values of the codes of 4 bits for m=4 are different depending on the most adjacent signal points selected as shown at the position of × sign 18 in Fig. 9, a metric value for indicating the highest reliability degree is used for the bit whose value does not change with a selected signal point and a metric value for indicating the lowest reliability degree is used for the bit whose value changes with the selected signal point.

In other words, when the received signal point is positioned at × sign 18 in Fig. 9 and a partial bit value in 4 bits for m=4 changes with a selected signal point, the metric value for indicating the slightly lower reliability degree is used.

For example, when the signal point 18R of [0101;00] is selected, the value "1" of bit 0 and bit 2 in the value [0101] of 4 bits for m=4 changes if the most adjacent signal points are selected erroneously.

Then, in this case, the metric value for indicating the slightly lower reliability degree, for example, a metric value [110] is used.

Also, when the changeable bit has a value of "0", a metric value [001], for example, is used. Alternatively, a metric value in I-axis direction or a metric value in Q-axis direction for 2 bits for n=2 may be used as it is.

By practicing the above calculation method for each bit for m=4, metric values for all bits for m=4 can be calculated.

As described above, by using the method according to the present embodiment, the metric necessary for soft decision Viterbi decoding can be calculated. Accordingly, a transmission system having the further promoted error correcting capability in addition to the effect similar to that obtained by the first embodiment can advantageously be obtained.

Further, when the error correction decoding for the second coded data stream is effected through hard decision Viterbi decoding, the error correcting capability is degraded slightly but the circuit scale can be reduced to advantage.

Next, a third embodiment of the transmission system according to the invention will be described by making reference to Fig. 10 showing the construction of a transmitter in block form and Fig. 11 showing the construction of a receiver in block form.

In the present embodiment, the second convolution coding circuit 32 and second Viterbi decoding circuit 102 are removed from the construction in the first embodiment of Figs. 1 and 2.

In accordance with this change, however, the second serial/parallel conversion circuit 42 is replaced with a second serial/parallel conversion circuit 42' that is a circuit for rearranging at once the second coded data stream at (c2) in Fig. 3 into the second word stream at (g2). In addition, the second parallel/serial conversion circuit 92 is replaced with a second parallel/serial conversion circuit 92' that is a circuit for rearranging at once, conversely to the above, the received second word stream at (g2) in Fig. 3 to the received second information data stream at (c2).

The operational procedures of these circuits are the same as those in the first embodiment with the only exception that the error correction coding for the second information data stream and its decoding are not carried out and therefore their explanation will be omitted.

In the method in this embodiment, a code error occurring in the word stream of 4 bits for m=4 cannot be corrected. This counts for the fact that this transmission system is difficult to use in the mobile radio communication in which there is a possibility that the radio wave is interrupted instantaneously. But, in the presence of ordinary random noise alone, an error very rarely takes place in the word stream of 4 bits for m=4. Accordingly, when this embodiment is temporarily used for fixed radio communications, an excellent, high-transmission rate transmission system can be obtained, having the high error correcting capability as in the case of the transmission system according to the first embodiment.

Further, in the present embodiment, too, the code rate of the error correcting code for the first information data stream can be changed freely, so that a high-performance and easy-to-handle transmission system can be obtained which can flexibly change the code rate of the error correcting code in accordance with a change in the transmission path conditions.

As described above, by using the method according to the present embodiment, an excellent transmission system being smaller in circuit scale than the transmission system according to the first embodiment and having the high error correcting capability similarly to the transmission system according to the first embodiment and the high transmission rate can be obtained when this embodiment is used for a temporary fixed radio communications. Also, a high-performance and easy-to-handle transmission system can be obtained which can freely change the code rate of the error correcting code and can flexibly change the code rate of the error correcting code in accordance with a change in transmission path conditions.

Next, a fourth embodiment of the transmission system will be described by making reference to Fig. 12 showing an example of circuit construction of a transmitter and Fig. 13 showing an example of circuit construction of a receiver.

In the present embodiment, the use of a Reed-Solomon code serving as an outer code is added to the transmission system of the third embodiment and the present embodiment differs from the third embodiment in that a RS coding circuit 142 representing a Reed-Solomon coding circuit for 8 bits per 1 word process and a RS decoding circuit 143 representing a Reed-Solomon decoding circuit for 8 bits per word process are newly added and the contents processed by information data stream divider circuit 20' and information data stream combining circuit 130' is changed.

The circuit enclosed by dotted-line frame 140 in Fig. 12 is the same as the circuit of the transmitter in Fig. 10, the circuit enclosed by dotted-line frame 141 in Fig. 13 is the same as the circuit of the receiver in Fig. 11.

Operation of these internal circuits is the same as that in the third embodiment and will not be described, and only signal processing methods in the data stream divider circuit 20' and data stream combining circuit 130', different from those in the third embodiment, will be described.

Incidentally, in decoding of a Reed-Solomon code, a code error is detected and corrected in a unit of word. For example, 204 words are defined in one block in advance and when the number of words suffering from code error is within 8, errors in transmitted information data stream can be corrected thoroughly. But when the number of words suffering from errors exceeds 8, it poses a problem that errors cannot be corrected and besides erroneous correction takes place to aggravate the code error.

If only one bit in one word is subjected to an error, the number of words suffering from error is one but even when all bits in one word are subjected to errors, the number of words suffering from errors is still only one. Accordingly, in case a phenomenon that a plurality of bit errors take place at a time occurs, it is possible to drastically improve the possibility of occurrence of erroneous correction in Reed-Solomon decoding by precedently collecting bits liable to suffer from errors concurrently into one word.

On the other hand, in the event that the level is reduced greatly due to fading and the radio wave is interrupted instantaneously, the received signal position at × sign in Fig. 7 is shifted further largely and an error also takes place in the code of 4 bits for m=4. In the extreme, errors possibly occur over 2 bits or more in 4 bits.

Under the circumstances, the modulation data detected by the first signal point position deciding circuit 71 in Fig. 13 is conditioned as shown at (g1) and (g2) in Fig. 14. In Fig. 14, errors are generated in hatched bits. Numbers at (c1), (d1), (e2) and (f2) in Fig. 14 are under the same process steps as those in Fig. 3.

Incidentally, errors generated in 2 bits for n=2 at (g1) in Fig. 14 can be corrected by the first Viterbi decoding circuit 101 but error correction is not made to the data of 4 bits for m=4. Consequently, code errors as shown at (c2) in Fig. 14 remain without alteration in the second information data stream inputted to the data stream combining circuit 130'.

If this information data stream is simply divided in a unit of 8 bits per word to form a RS word sequence to be inputted to the RS decoding circuit 143, code errors occur over two words as shown at (a) in Fig. 14 and erroneous correction tends to occur in decoding of the Reed-Solomon code.

Therefore, in the present embodiment, the data stream combining circuit 130' is so constructed as to divide the code such that the data of 4 bits for m=4 detected by a second signal point position deciding circuit 72, that is, the data of 4 bits enclosed by thick line frame at (g2) in Fig. 15 is contained in one word of the RS word sequence as shown by thick line frame at (a).

Conversely, the data stream divider circuit 20' is constructed such that the data in RS word sequence at (a) in Fig. 15 is divided and modulated as shown at (c2) and the code in one word as shown by thick line frame at (a) is so distributed as to be arranged as 4 bits for m=4 of data as shown at (g2). Alternatively, the circuit may be so constructed as to perform division and association as shown at (a), (c2) and (g2) in Fig. 16.

For the second word stream of 4 bits for m=4, bit interleave is not carried out. Accordingly, inverse bit interleave is not carried out for the received second word stream, either.

With the data stream divider circuit 20' and data combining circuit 130' as above, the data of 4 bits for m=4 can always be arranged in the same word of the RS code sequence. Therefore, even when the received signal level falls greatly due to fading or the radio wave is interrupted instantaneously and code errors are generated over a plurality of bits in a specified symbol of the received signal, generation of errors is simply limited to one word in the RS code sequence, with the result that erroneous correction liable to occur in such a case can be decreased and the high-performance transmission system of further reduced code error rate as compared to the transmission system according to the third embodiment can be obtained.

As described above, by using the method according to the present embodiment, the excellent transmission system can be obtained which is further reduced in code error rate as compared to the case where the outer code of Reed-Solomon code is simply added to the transmission system according to the third embodiment.

The method for dividing the modulation word is not limited to the dividing method based on n=2 and m=4 as shown in Fig. 6 but another desired dividing method based on n=4 and m=2 as shown in Fig. 17 may be used. Here, in the case of 4 bits for n=4 and 2 bits for m=2, the relation between word in the block or the relation between word representing blocks is preferably in gray code relationship.

In case the signal word point arrangement of Fig. 17 is used, when the signal word of 4 bits for n=4 delivered out of the first serial/parallel conversion circuit 121 on the receiving side of Fig. 1 is, for example, [1111], 4 modulation signal points indicated at square frames in Fig. 18 are selected by the second signal point position deciding circuit 72.

Accordingly, the distance between these modulation points substantially equals that in the case of QPSK and the code error rate for 2 bits for m=2 can advantageously be reduced to a large extent. The modulation code position as above is very advantageous in a modulation scheme of larger multi-level, for example, 256 QAM. Obviously, this modulation code can also be applied to the transmission system of the second embodiment.

The value of n can be set to an arbitrary positive number but to assure equality in the I-axis direction and Q-axis direction, the value may preferably be set to an even value.

In the foregoing embodiments, the modulation data has been described as being divided into two of n bits and m bits that are independently converted into error correcting codes but more generally, the modulation data can be divided into M (M being integer of 2 or more) coded data word of k bits, n bits, m bits and the individual coded data word may independently be converted into error correcting codes and then transmitted.

In the foregoing embodiments, the error correcting code used in the second coded data stream has been described as being implemented with the convolutional code but the frequency of errors generated in the second coded data stream is sufficiently low and so the Reed-Solomon code is also usable. When the code error rate is less than a constant, the error correcting capability based on the Reed-Solomon code is very high and therefore, by using the Reed-Solomon code, a transmission system having the high error correcting capability can be obtained.

Obviously, the present invention can be applied to not only the transmission system with the ordinary digital modulation scheme using one carrier but also a transmission system with orthogonal frequency division multiplexing scheme (OFDM scheme) for transmitting information data with a plurality of mutually orthogonal carriers.

Obviously, the present invention can also be applicable to a modulation scheme for multi-level modulation in one-dimensional direction in which a one-dimensional digital signal subjected to multi-level modulation is frequency-modulated and transmitted.

As described above, according to the invention, by using the relatively inexpensive and commercially available LSI circuit for soft decision Viterbi decoding adapted for the BPSK scheme without developing new LSI circuits, the high-performance and easy-to-use transmission system can be constructed which can be based on the error correction coding scheme considering the modulation signal position arrangement similarly to the trellis coded modulation scheme, can have the high code error correcting capability to permit the code error correction even in the event of instantaneous interruption of the radio wave and can change the code rate of the error correcting code flexibly in accordance with a change in the signal transmission path condition.

## Claims

1. A transmission system for transmitting information codes by using a multi-level modulation scheme, comprising a transmitter and a receiver for receiving a transmission signal from said transmitter, said transmitter including:

a divider circuit (20) for inputting information data stream and dividing said information data stream into M data streams, wherein M is an integer not less than 2;
an error correction coding circuit (31, 32, 41, 42) for individually converting said M data streams into error correcting coded data stream so as to deliver M error correcting coded data streams;
a multi-level modulation circuit (50) for making the correspondence between data stream of N bits, wherein N is an integer not less than 2, constituted by said M error correcting coded data streams and a plurality of signal points arranged on a signal constellation and modulating two carriers orthogonal to each other with coordinate values of signal points on the signal constellation corresponding to said N-bit coded data stream; and
a high frequency circuit unit (4, 5) for converting a modulated signal delivered out of said multi-level modulation circuit into a radio frequency and delivering it to a transmission antenna (6).

**2.** A transmission system according to claim 1, wherein said divider circuit (20) divides said inputted information data stream into first and second data streams;
said error correction coding circuit includes:

a first error correction coding circuit (31) for converting said first data stream into a first error correcting coded data stream;
a first serial/parallel conversion circuit (41) for rearranging said first error correcting coded data stream to a word of n bits, where n is an integer not less than 2, and delivering a first word stream;
a second error correction coding circuit (32) for converting said second data stream into a second error correcting coded data stream; and
a second serial/parallel conversion circuit (42) for rearranging said second error correcting coded data stream to a word of m bits, where m is not less than 2, and delivering a second word stream, and
said multi-level modulation circuit (50) is based on a multi-level signal modulation scheme in which word of (m+n) bits are made to correspond to $2^{(m+n)}$ signal points arranged on said signal constellation, said word of (m+n) bits are multi-level signals including word of n bits, of which at least one bit has a word value different from that of the other between the most adjacent signal points, and the remaining word of m bits and said multi-level signals are modulated, whereby two carriers orthogonal with each other are modulated with coordinate component values of signal points on the signal constellation corresponding to the word of (m+n) bits constituted by n bits of said first word stream and m bits of said second word stream and the modulated two carriers are synthesized to deliver a modulated signal to said high frequency circuit unit.

**3.** A transmission system according to claim 2, wherein said multi-level modulation circuit (50) forms the multi-level signals based on $2^{(m+n)}$ -QAM modulation scheme by:

arranging $2^{(m+n)}$ signal points constituted by an arrangement of $2^m$ blocks each having $2^n$ signal points on said signal constellation;
assigning, in each block, $2^m$ different word of m bits and $2^n$ different word of n bits in gray code configuration to $2^{(m+n)}$ signal points, said word of m bits being for specifying a block to which signal points said word correspond to belong and said word of n bits being for specifying positions in the block to which said signal points said word correspond to belong; and
assigning word of (m+n) bits resulting from combining said m-bit word and said n-bit word to said $2^{(m+n)}$ signal points on said signal constellation.

**4.** A transmission system according to claim 2, wherein each of said first error correction coding circuit (31) and said second error correction coding circuit (32) is a convolution coding circuit, and the value of code rate in said second error correction coding circuit (32) is set to be larger than that in said first error correction coding circuit (31).

**5.** A transmission system according to claim 1, wherein said receiver includes:

a received signal point calculating circuit (60) for calculating coordinate values of received signals on the signal constellation;
a first error correction decoding unit (71, 91, 101) for selecting a signal point closest to a calculated coordinate value of a received signal from signal points arranged on said signal constellation, determining a received first error correcting coded data stream corresponding to n bits of a first word stream within a word of (m+n) bits corresponding to the selected signal point, and reproducing a received first data stream by decoding said received first error correcting coded data stream;
a first delay circuit (81) for delaying said received first data stream reproduced by said first error correction decoding unit (71, 91, 101) by a predetermined time and delivering the delayed data stream;
a re-correction coding unit (111, 121) for converting said received first data stream reproduced by said first error correction decoding unit (71, 91, 101) into said received first error correcting data stream;
a second delay circuit (82) for delaying a coordinate value of said received signal calculated by said received signal point calculating circuit (60) by a predetermined time and delivering the delayed coordinate value;
a second error correction decoding unit (72, 92, 102) for inputting the output of said second delay circuit (82) and the output of said re-correction coding unit (111, 121), selecting a signal point closest to the coordinate value of the inputted received signal from the signal points arranged on said signal constellation, determining a received second error correcting code data stream corresponding to m bits of a second word stream within a code of (m+n) bits corresponding to the selected signal point, and reproducing a received second data stream by decoding said received second error correcting coded data stream; and
a data stream combining circuit (130) for combining said received first data stream delivered out of said first delay circuit (81) and said received second data stream delivered out of said second error correction decoding unit (72, 92, 102) and delivering a combined data stream as reproduced information data stream.

**6.** A transmission system according to claim 1, wherein said receiver includes:

a received signal point calculating circuit (60) for calculating coordinated values of received signals on the signal constellation;
a first signal point position deciding circuit (71) for selecting a signal point closest to a calculated coordinate value of a received signal from signal points arranged on said signal constellation, calculating a code corresponding to n bits of a first word stream within a word of (m+n) bits corresponding to the selected signal point and delivering the calculated code as a received first word stream;
a first parallel/serial conversion circuit (91) for converting the received first word stream delivered out of said first signal point position deciding circuit (71) into a serial code so as to deliver a received first error correcting code stream;
a first error correction decoding circuit (101) for decoding said received first error correcting coded data stream from said first parallel/serial conversion circuit (91) to reproduce a received first data stream;
a first delay circuit (81) for delaying said received first data stream reproduced by said first error correction decoding circuit (101) by a predetermined time;
a received first error correction coding circuit (111) for converting said received first data stream reproduced by said first error correction decoding circuit (101) into a received first error correcting coded data stream;
a first serial/parallel conversion circuit (121) on the receiving side for converting said received first error correcting coded data stream into a parallel code of one word stream of n bits at the same timing as that for the conversion process in said first parallel/serial conversion circuit (91) and delivering the parallel code;
a second delay circuit (82) for delaying the coordinate value of said received signal calculated by said received signal point calculating circuit (60) by a predetermined time and delivering the delayed value;
a second signal point position deciding circuit (72) for inputting the output of said second delay circuit (82) and the output of said first serial/parallel conversion circuit (121) on the receiving side, selecting a signal point closest to the inputted coordinate value of received signal from signal points arranged on said signal constellation, calculating a code corresponding to m bits of a received second word stream within a word of (m+n) bits corresponding to the selected signal point, and delivering the calculated code as the received second word stream;
a second parallel/serial conversion circuit (92) for converting said received second word stream delivered out of said second signal point position deciding circuit (72) into a serial code so as to deliver a received second error correcting coded data stream;
a second error correction decoding circuit (102) for decoding said received second error correcting coded data stream from said second parallel/serial conversion circuit (92) so as to reproduce and deliver a received second data stream; and
a data stream combining circuit (130) for combining said received first data stream delivered out of said first delay circuit (81) and said received second data stream delivered out of said second error correction decoding circuit (102) and delivering a combined data stream as reproduced information data stream.

**7.** A transmission system according to claim 6, wherein said first error correction decoding circuit (101) includes a first Viterbi decoding circuit for carrying out soft decision Viterbi decoding, and said second error correction decoding circuit (102) includes a second decoding circuit for carrying out hard decision Viterbi decoding.

**8.** A transmission system according to claim 6, wherein each of said first error correction decoding circuit (101) and said second error correction decoding circuit (102) includes a Viterbi decoding circuit for carrying out soft decision Viterbi decoding.

**9.** A transmission system according to any of claims 2 to 8, wherein said first serial/parallel conversion circuit (41) has a bit interleave circuit (44) for applying a bit interleave process to the code resulting from rearrangement of said first error correction coded data stream to the word of n bits and delivering said first word stream.

**10.** A modulation apparatus used for a transmission system for transmitting information data stream by using a multi-level modulation scheme, comprising:

a divider circuit (20) for inputting information data stream and dividing said information data stream into M data streams, where M is an integer not less than 2;
an error correction coding circuit (31, 32, 41, 42) for individually converting said M data streams into error correcting coded data stream and delivering M error correcting data stream; and
a multi-level modulation circuit (50) for making the correspondence between data streams of N bits constructed of said M error correcting data streams and a plurality of signal points arranged on a signal constellation and modulating two carriers orthogonal with each other with coordinate values of signal points on the signal constellation corresponding to the N-bit data stream.

**11.** A modulation apparatus according to claim 10, wherein said divider circuit (20) divides said inputted N-bit information data stream into first and second data streams;
said error correction coding circuit includes:

a first error correction coding circuit (31) for converting said first data stream into a first error correcting code data stream;
a first serial/parallel conversion circuit (41) for rearranging said first error correcting coded data stream to a word of n bits, where n is an integer not less than 2, and delivering a first word stream;
a second error correction coding circuit (32) for converting said second data stream into a second error correcting code data stream; and
a second serial/parallel conversion circuit (42) for rearranging said second error correcting data stream to a word of m bits, where m is an integer not less than 2, and delivering a second word stream, and
said multi-level modulation circuit (50) is based on a multi-level signal modulation scheme in which word of (m+n) bits are made to correspond to $2^{(m+n)}$ signal points arranged on said signal constellation, said wird if (m+n) bits are multi-level signals including word of n bits, of which at least one has a word value different from that of the other between the most adjacent signal points, and the remaining word of m bits and said multi-level signals are modulated, whereby two carriers orthogonal with each other are modulated with coordinate component values of signal points on the signal constellation corresponding the word of (m+n) bits constituted by n bits of said first word stream and m bits of said second word stream and are synthesized to deliver the modulated two carriers.

**12.** A modulation apparatus according to claim 11, wherein said multi-level modulation circuit (50) forms multi-level signals based on a $2^{(m+n)}$ -QAM modulation scheme in such a manner that:

$2^{(m+n)}$ signal points constituted by an arrangement of $2^m$ blocks each having $2^n$ signal points are arranged on said signal constellation;
in each block, $2^m$ different codes of m bits and $2^n$ different word of n bits in gray code configuration are assigned to $2^{(m+n)}$ signal points, said word of m bits being for specifying a block to which signal points said word correspond to belong and said word of n bits being for specifying positions in the block to which signal points said word correspond to belong; and
word of (m+n) bits obtained by combining said m-bit word and said n-bit word are assigned to said $2^{(m+n)}$ signal points on said signal constellation.

FIG.1

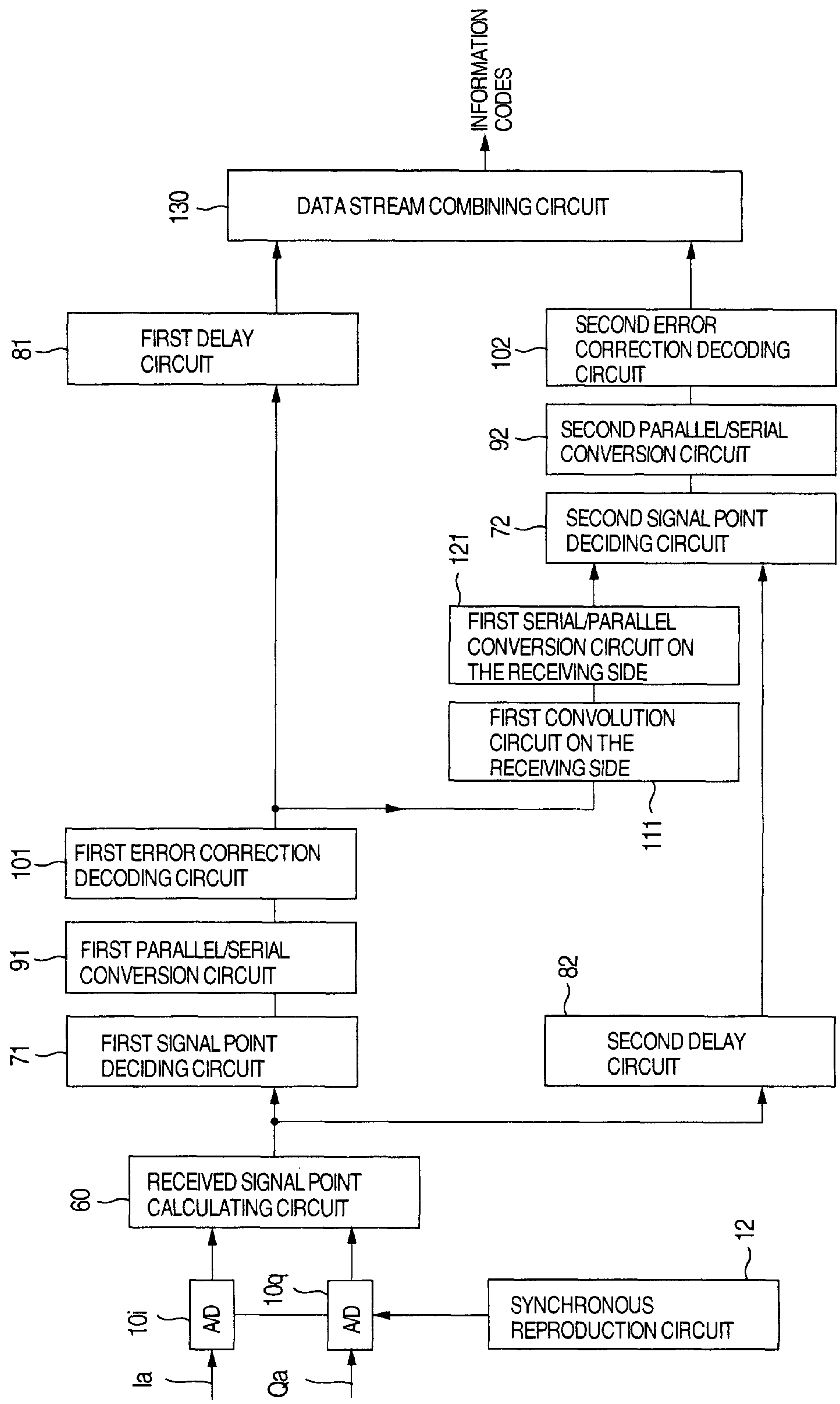
INFORMATION CODES
130
DATA STREAM COMBINING CIRCUIT
81
FIRST DELAY CIRCUIT
102
SECOND ERROR CORRECTION DECODING CIRCUIT
92
SECOND PARALLEL/SERIAL CONVERSION CIRCUIT
72
SECOND SIGNAL POINT DECIDING CIRCUIT
121
FIRST SERIAL/PARALLEL CONVERSION CIRCUIT ON THE RECEIVING SIDE
FIRST CONVOLUTION CIRCUIT ON THE RECEIVING SIDE
111
101
FIRST ERROR CORRECTION DECODING CIRCUIT
91
FIRST PARALLEL/SERIAL CONVERSION CIRCUIT
71
FIRST SIGNAL POINT DECIDING CIRCUIT
82
SECOND DELAY CIRCUIT
60
RECEIVED SIGNAL POINT CALCULATING CIRCUIT
12
10i
A/D
10q
A/D
SYNCHRONOUS REPRODUCTION CIRCUIT
Ia
Qa

FIG.2

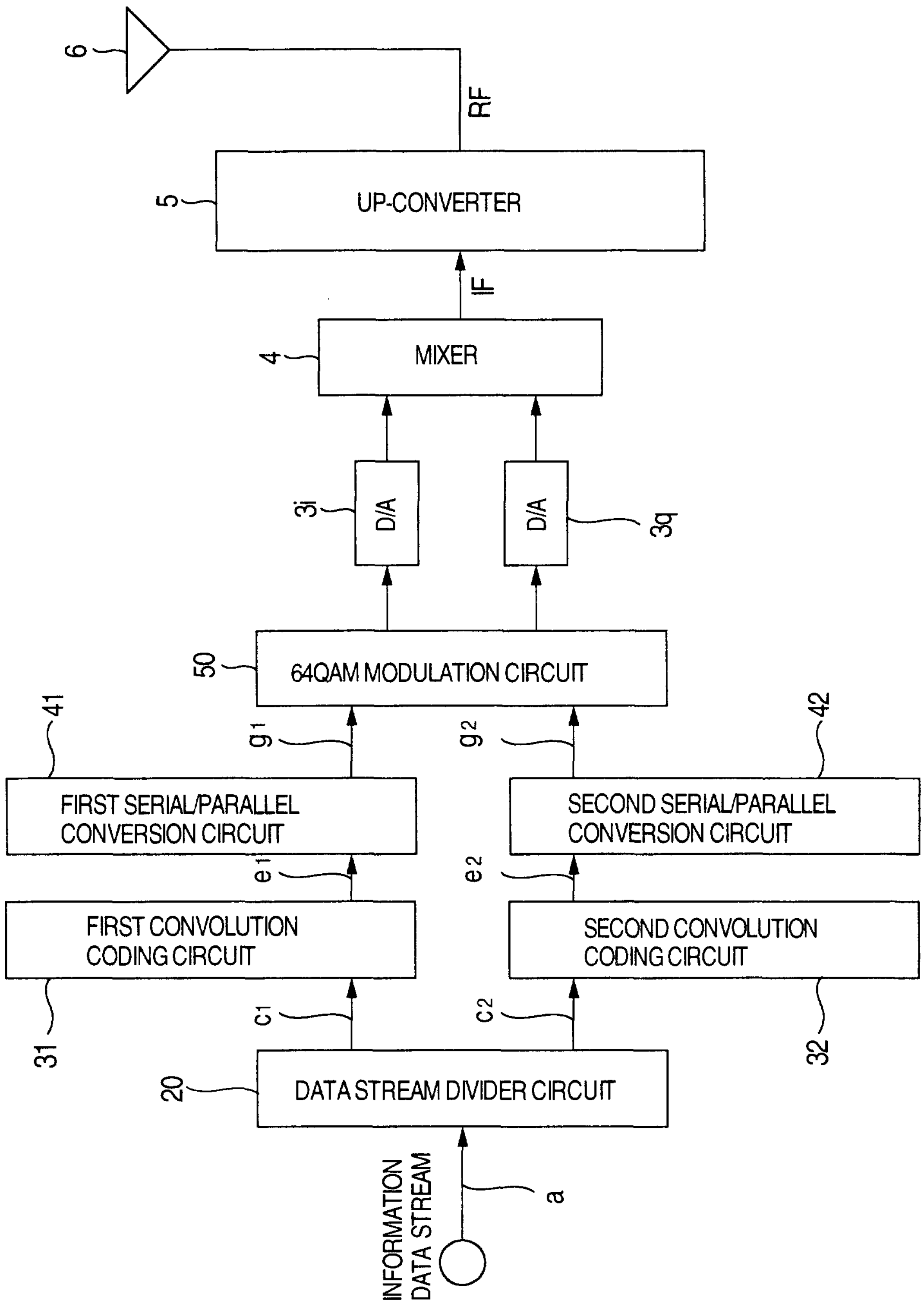
6
RF
5
UP-CONVERTER
IF
4
MIXER
3i
D/A
D/A
3q
50
64QAM MODULATION CIRCUIT
41
g1
g2
42
FIRST SERIAL/PARALLEL CONVERSION CIRCUIT
SECOND SERIAL/PARALLEL CONVERSION CIRCUIT
e1
e2
FIRST CONVOLUTION CODING CIRCUIT
SECOND CONVOLUTION CODING CIRCUIT
31
c1
c2
32
20
DATA STREAM DIVIDER CIRCUIT
INFORMATION DATA STREAM
a

FIG.3

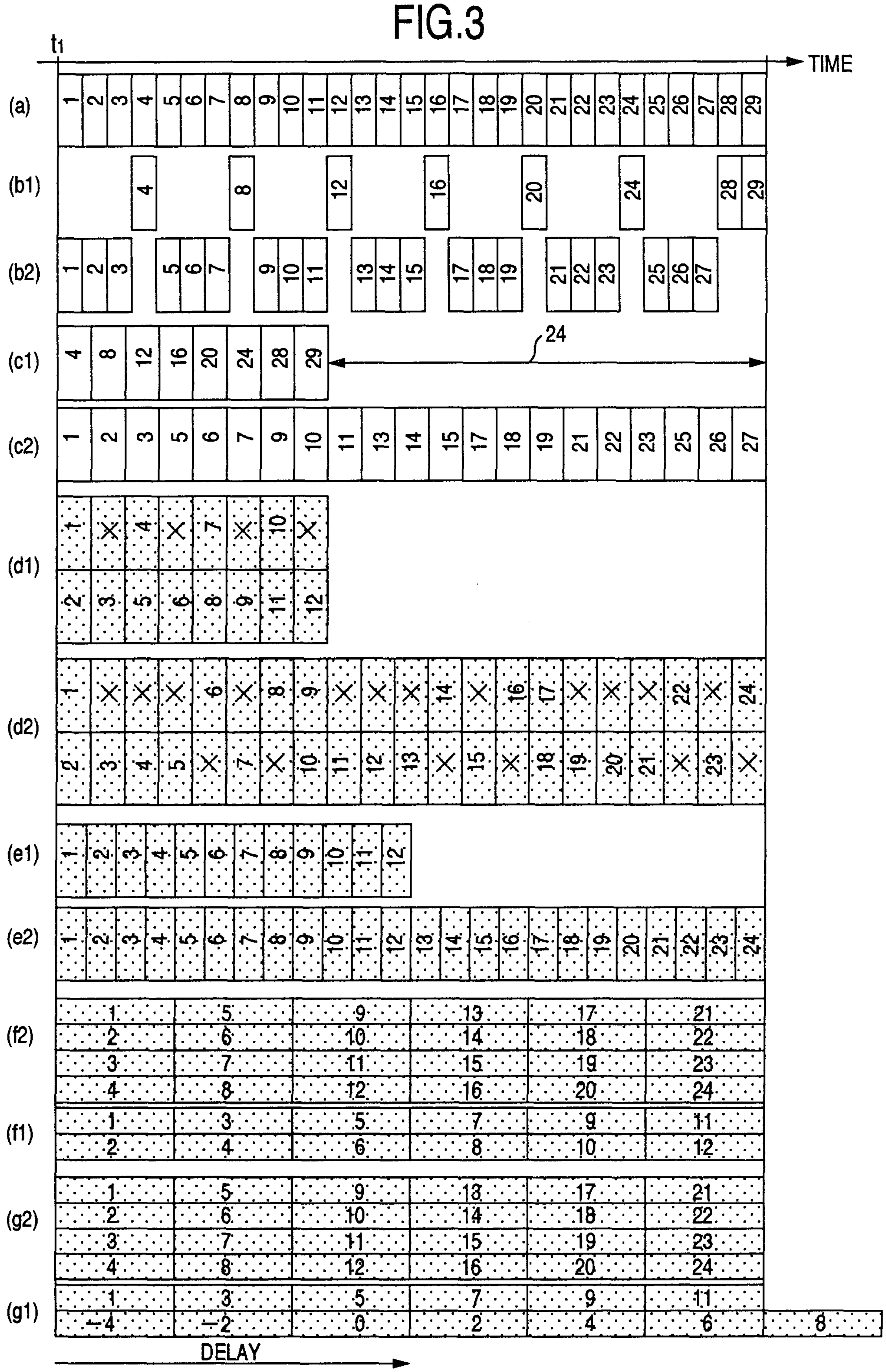

FIG.4

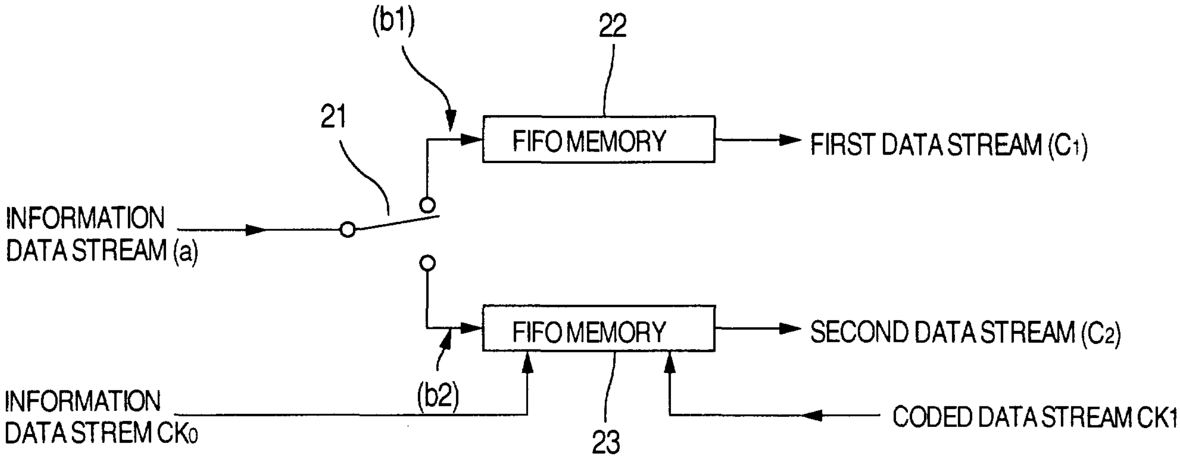
(b1)
22
21
FIFO MEMORY
FIRST DATA STREAM (C1)
INFORMATION
DATA STREAM (a)
FIFO MEMORY
SECOND DATA STREAM (C2)
INFORMATION
DATA STREM CK0
(b2)
CODED DATA STREAM CK1
23

FIG.5

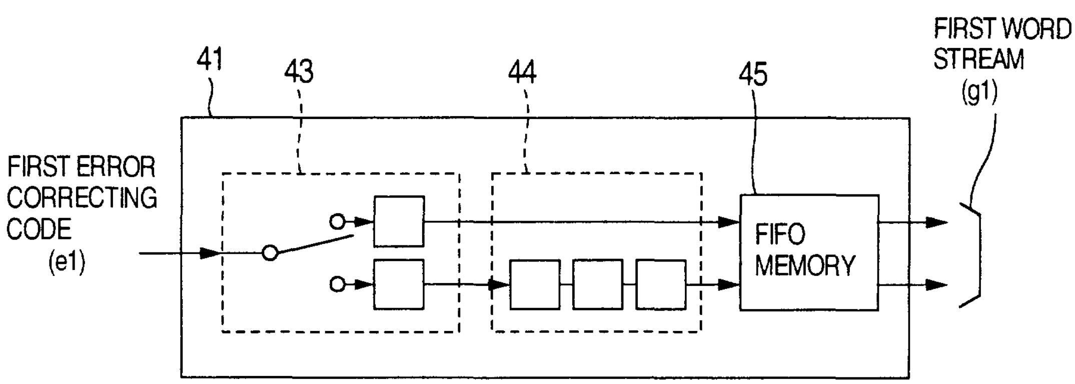
FIRST WORD
STREAM
(g1)
41
43
44
45
FIRST ERROR
CORRECTING
CODE
(e1)
FIFO
MEMORY

FIG.6

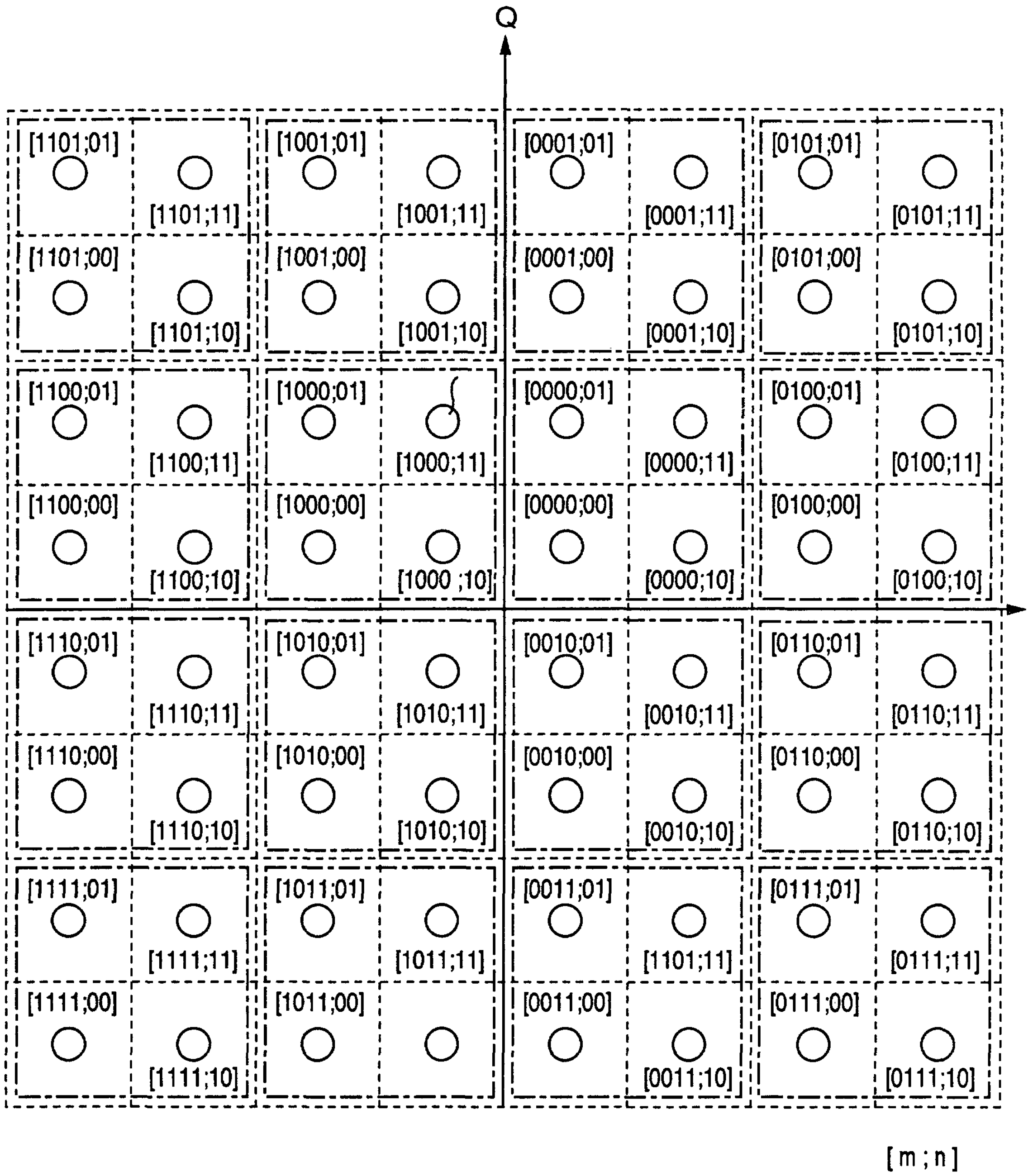
Q
I
[1101;01]
[1101;11]
[1001;01]
[1001;11]
[0001;01]
[0001;11]
[0101;01]
[0101;11]
[1101;00]
[1101;10]
[1001;00]
[1001;10]
[0001;00]
[0001;10]
[0101;00]
[0101;10]
[1100;01]
[1100;11]
[1000;01]
[1000;11]
[0000;01]
[0000;11]
[0100;01]
[0100;11]
[1100;00]
[1100;10]
[1000;00]
[1000 ;10]
[0000;00]
[0000;10]
[0100;00]
[0100;10]
[1110;01]
[1110;11]
[1010;01]
[1010;11]
[0010;01]
[0010;11]
[0110;01]
[0110;11]
[1110;00]
[1110;10]
[1010;00]
[1010;10]
[0010;00]
[0010;10]
[0110;00]
[0110;10]
[1111;01]
[1111;11]
[1011;01]
[1011;11]
[0011;01]
[1101;11]
[0111;01]
[0111;11]
[1111;00]
[1111;10]
[1011;00]
[0011;00]
[0011;10]
[0111;00]
[0111;10]
[m;n]

FIG.7

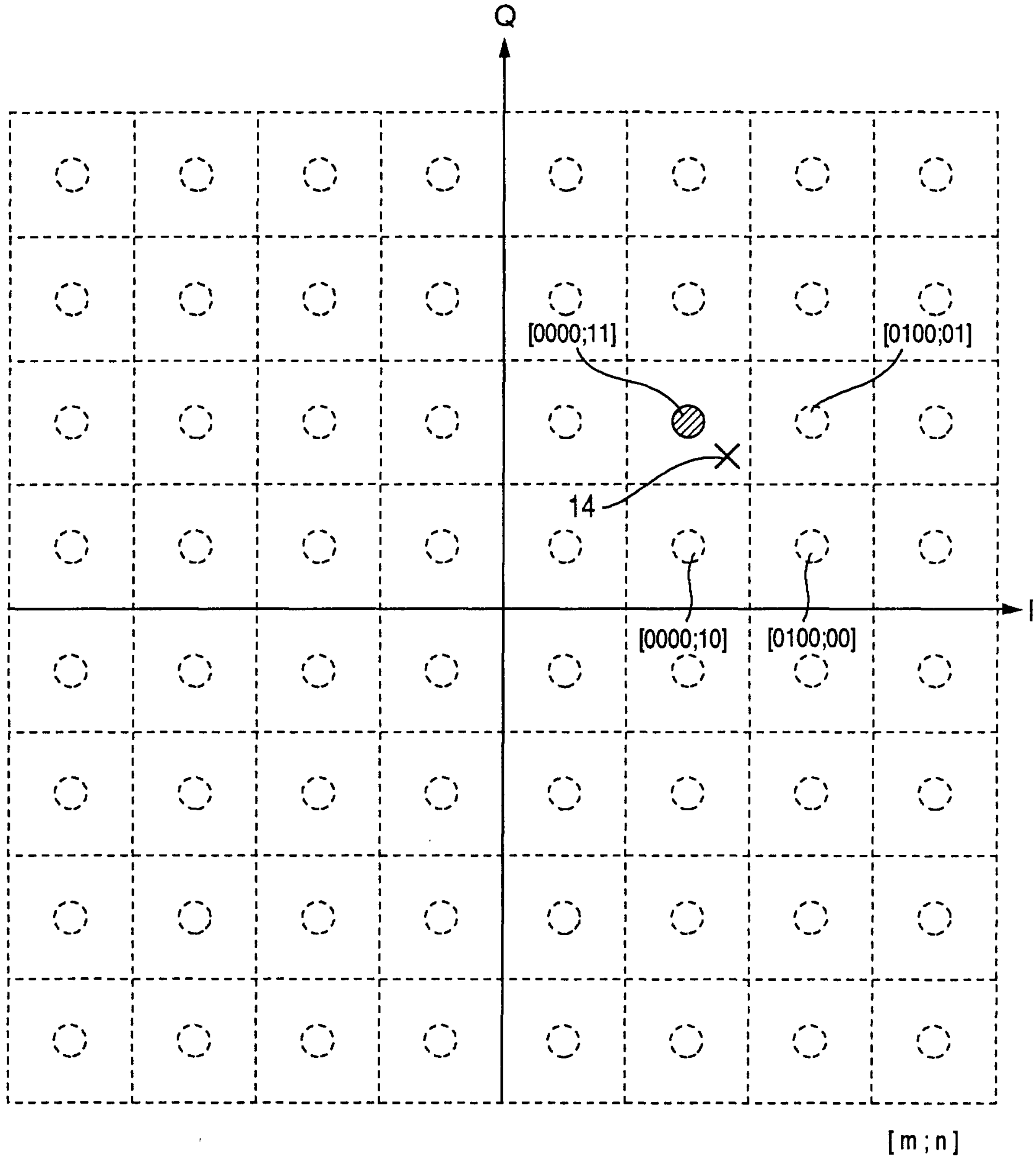

FIG.8

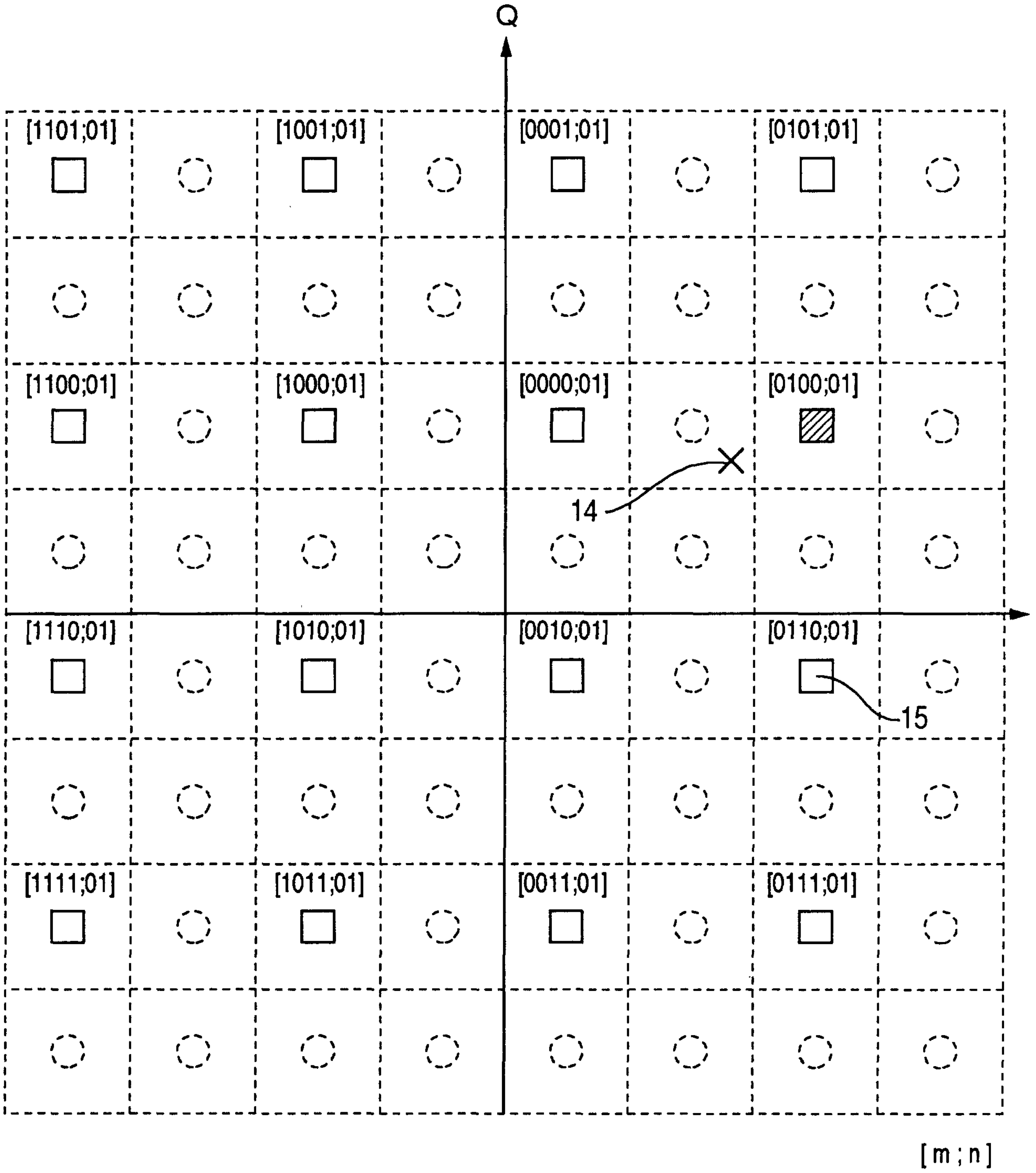
Q
I
[1101;01]
[1001;01]
[0001;01]
[0101;01]
[1100;01]
[1000;01]
[0000;01]
[0100;01]
14
[1110;01]
[1010;01]
[0010;01]
[0110;01]
15
[1111;01]
[1011;01]
[0011;01]
[0111;01]
[m;n]

FIG.9

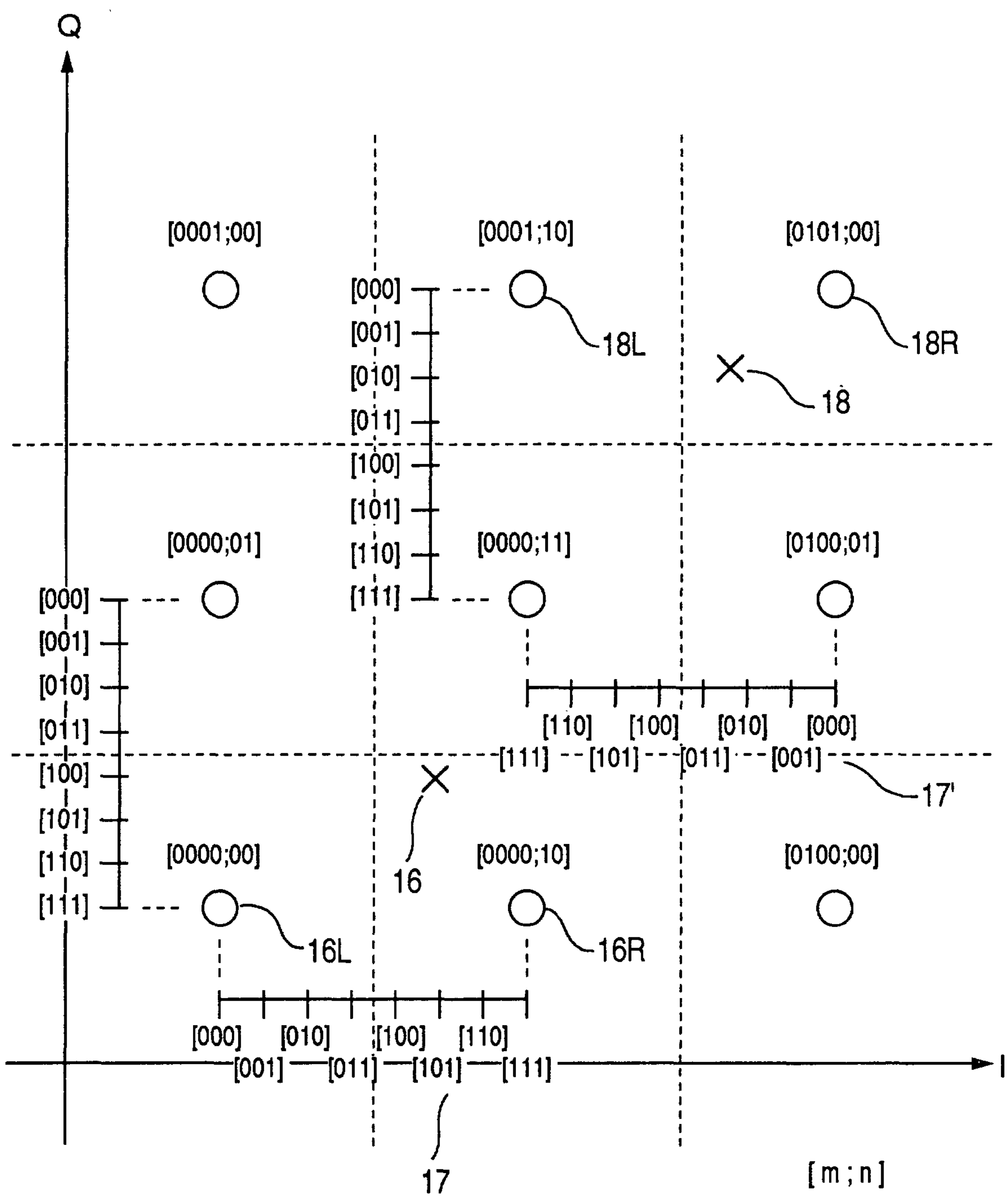
Q
I
[0001;00]
[0001;10]
[0101;00]
[0000;01]
[0000;11]
[0100;01]
[0000;00]
[0000;10]
[0100;00]
[000]
[001]
[010]
[011]
[100]
[101]
[110]
[111]
18L
18R
18
16
16L
16R
17
17'
[m;n]

FIG.10

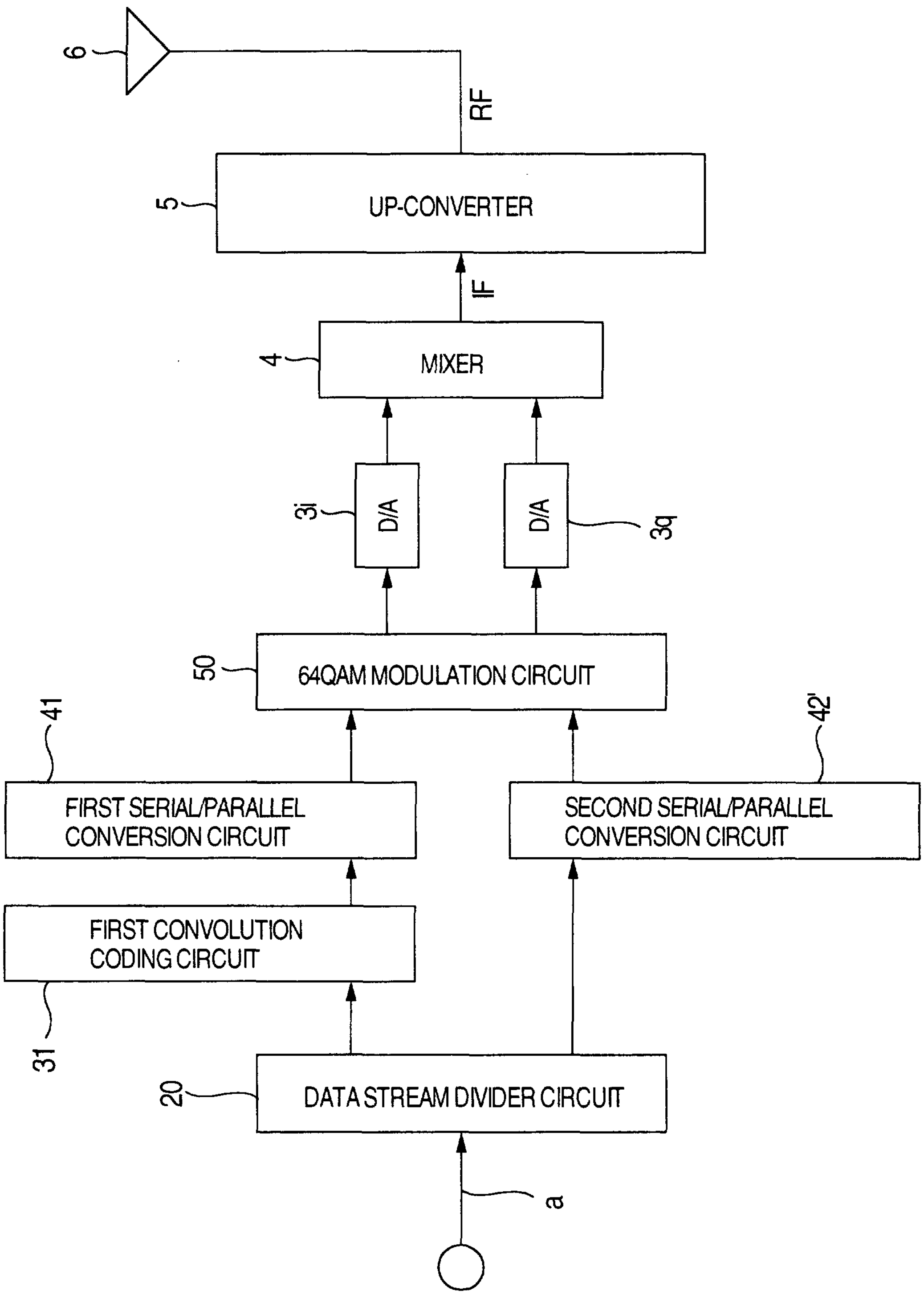
6
RF
5
UP-CONVERTER
IF
4
MIXER
3i
D/A
D/A
3q
50
64QAM MODULATION CIRCUIT
41
FIRST SERIAL/PARALLEL CONVERSION CIRCUIT
42'
SECOND SERIAL/PARALLEL CONVERSION CIRCUIT
FIRST CONVOLUTION CODING CIRCUIT
31
20
DATA STREAM DIVIDER CIRCUIT
a

FIG.11

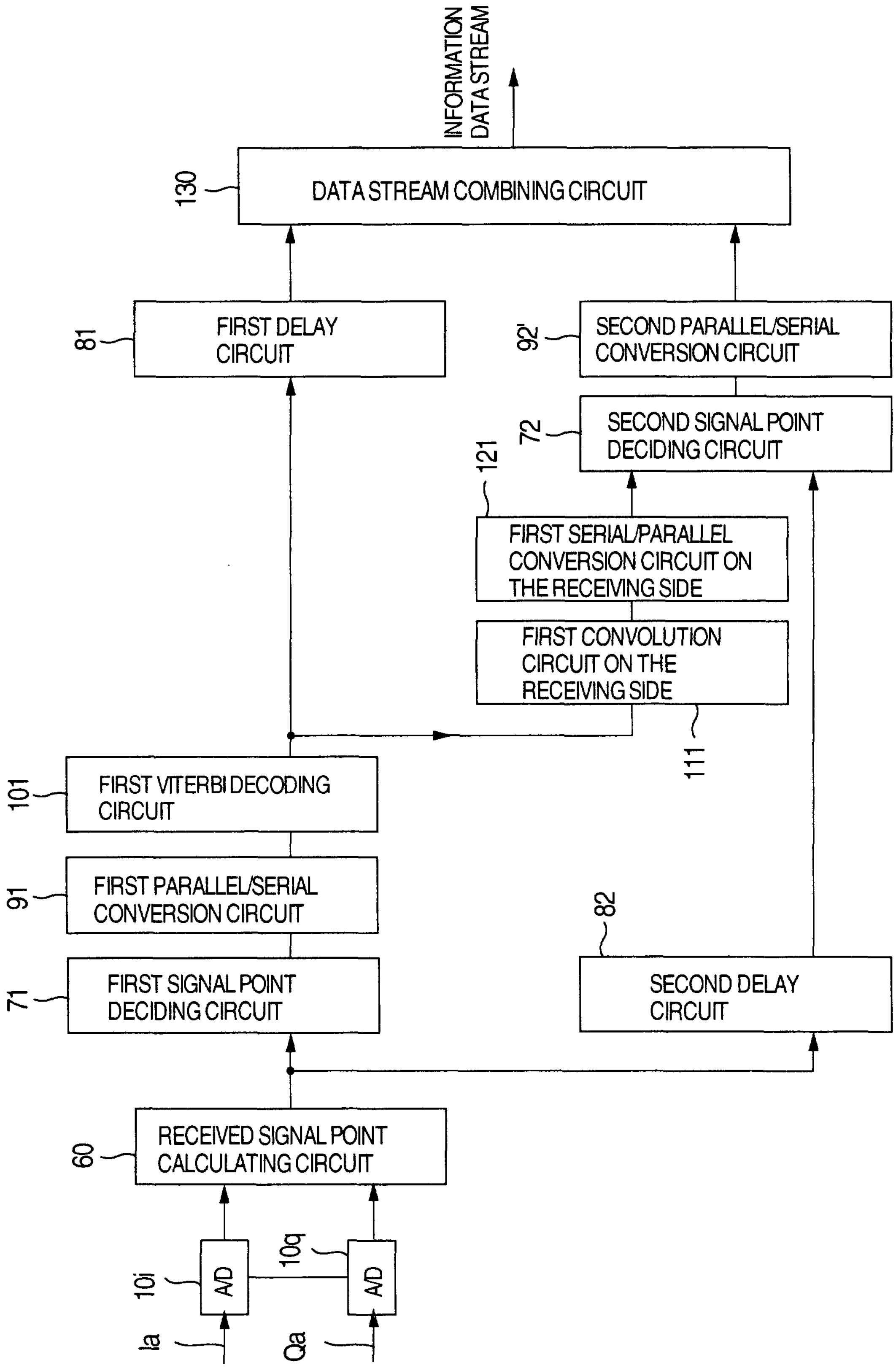
INFORMATION DATA STREAM
130
DATA STREAM COMBINING CIRCUIT
81
FIRST DELAY CIRCUIT
92'
SECOND PARALLEL/SERIAL CONVERSION CIRCUIT
72
SECOND SIGNAL POINT DECIDING CIRCUIT
121
FIRST SERIAL/PARALLEL CONVERSION CIRCUIT ON THE RECEIVING SIDE
FIRST CONVOLUTION CIRCUIT ON THE RECEIVING SIDE
111
101
FIRST VITERBI DECODING CIRCUIT
91
FIRST PARALLEL/SERIAL CONVERSION CIRCUIT
71
FIRST SIGNAL POINT DECIDING CIRCUIT
82
SECOND DELAY CIRCUIT
60
RECEIVED SIGNAL POINT CALCULATING CIRCUIT
10i
A/D
10q
A/D
Ia
Qa

FIG.12

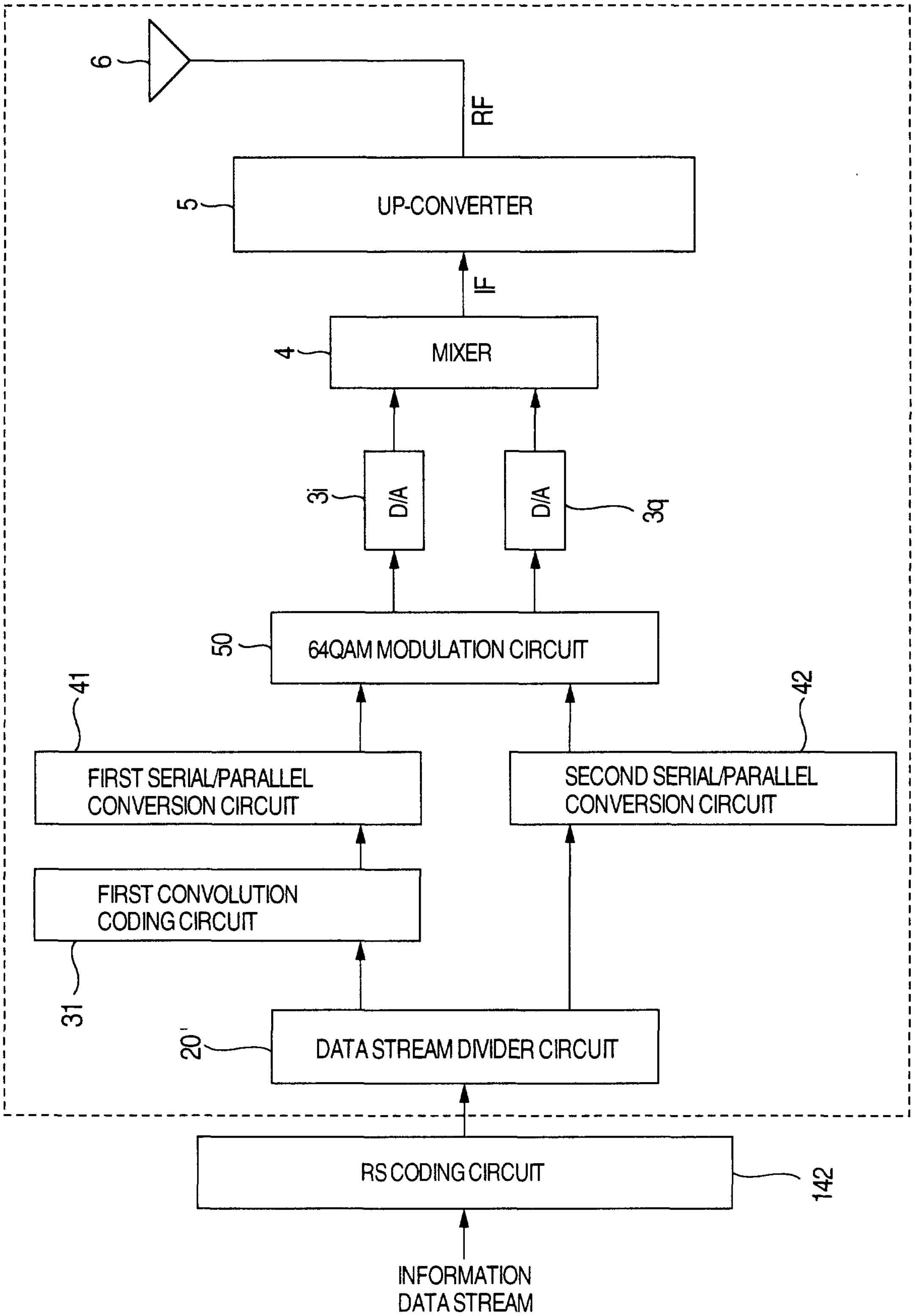
6
RF
5
UP-CONVERTER
IF
4
MIXER
3i
D/A
D/A
3q
50
64QAM MODULATION CIRCUIT
41
FIRST SERIAL/PARALLEL
CONVERSION CIRCUIT
42
SECOND SERIAL/PARALLEL
CONVERSION CIRCUIT
FIRST CONVOLUTION
CODING CIRCUIT
31
20'
DATA STREAM DIVIDER CIRCUIT
RS CODING CIRCUIT
142
INFORMATION
DATA STREAM

FIG.13

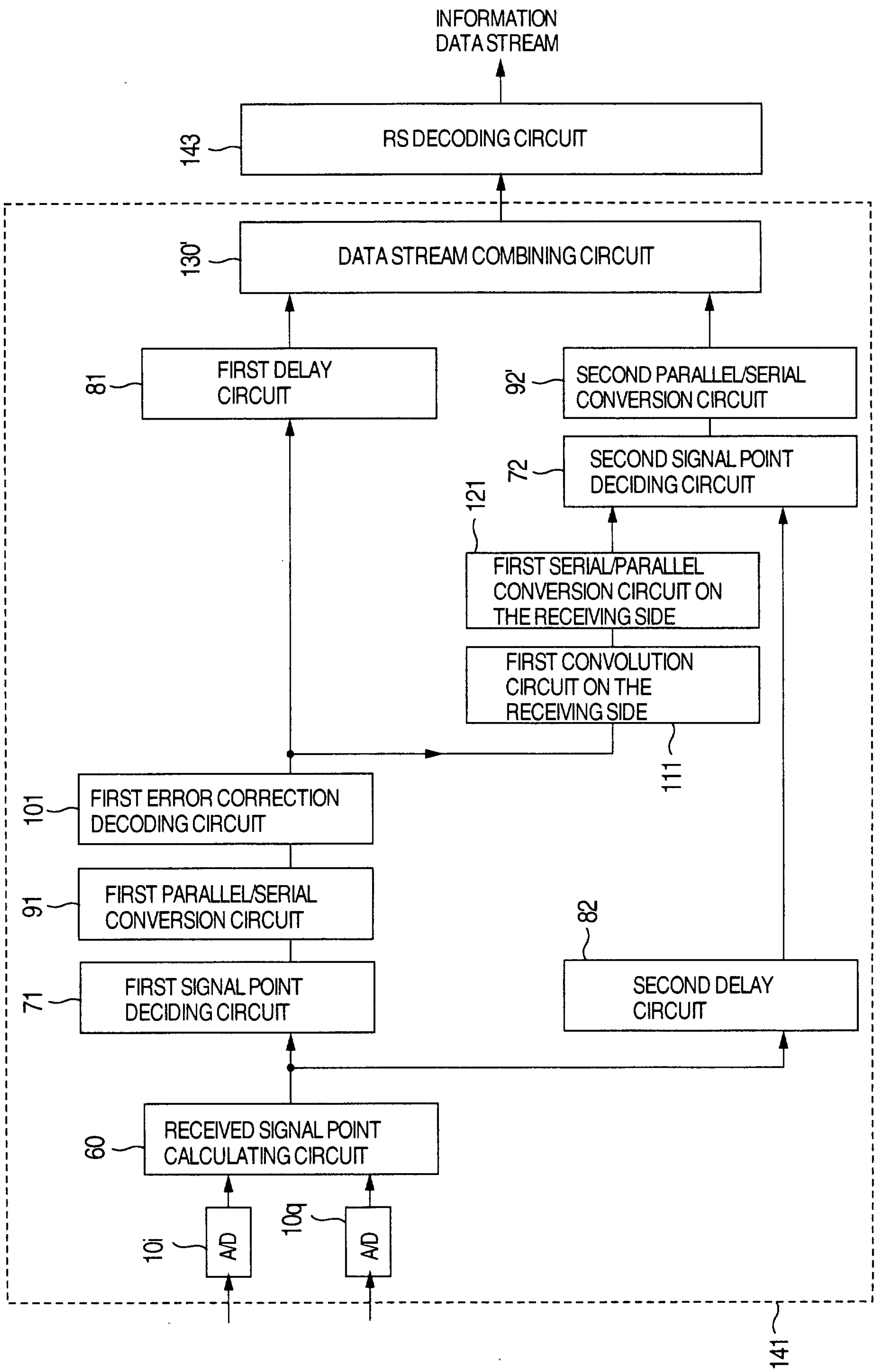
INFORMATION DATA STREAM
RS DECODING CIRCUIT
143
DATA STREAM COMBINING CIRCUIT
130'
FIRST DELAY CIRCUIT
81
SECOND PARALLEL/SERIAL CONVERSION CIRCUIT
92'
SECOND SIGNAL POINT DECIDING CIRCUIT
72
121
FIRST SERIAL/PARALLEL CONVERSION CIRCUIT ON THE RECEIVING SIDE
FIRST CONVOLUTION CIRCUIT ON THE RECEIVING SIDE
111
FIRST ERROR CORRECTION DECODING CIRCUIT
101
FIRST PARALLEL/SERIAL CONVERSION CIRCUIT
91
FIRST SIGNAL POINT DECIDING CIRCUIT
71
82
SECOND DELAY CIRCUIT
RECEIVED SIGNAL POINT CALCULATING CIRCUIT
60
10i
A/D
10q
A/D
141

FIG.14

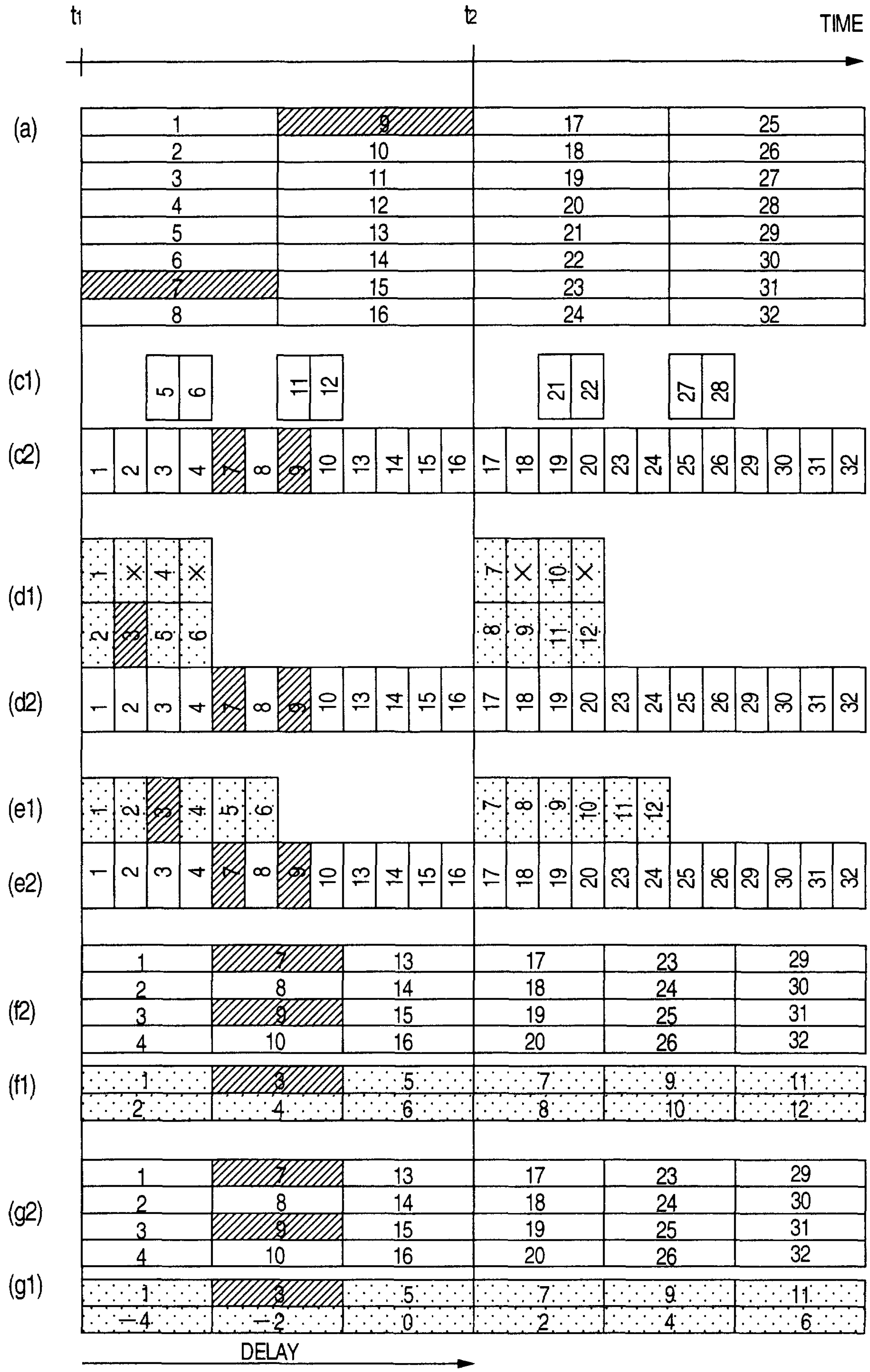

FIG.15

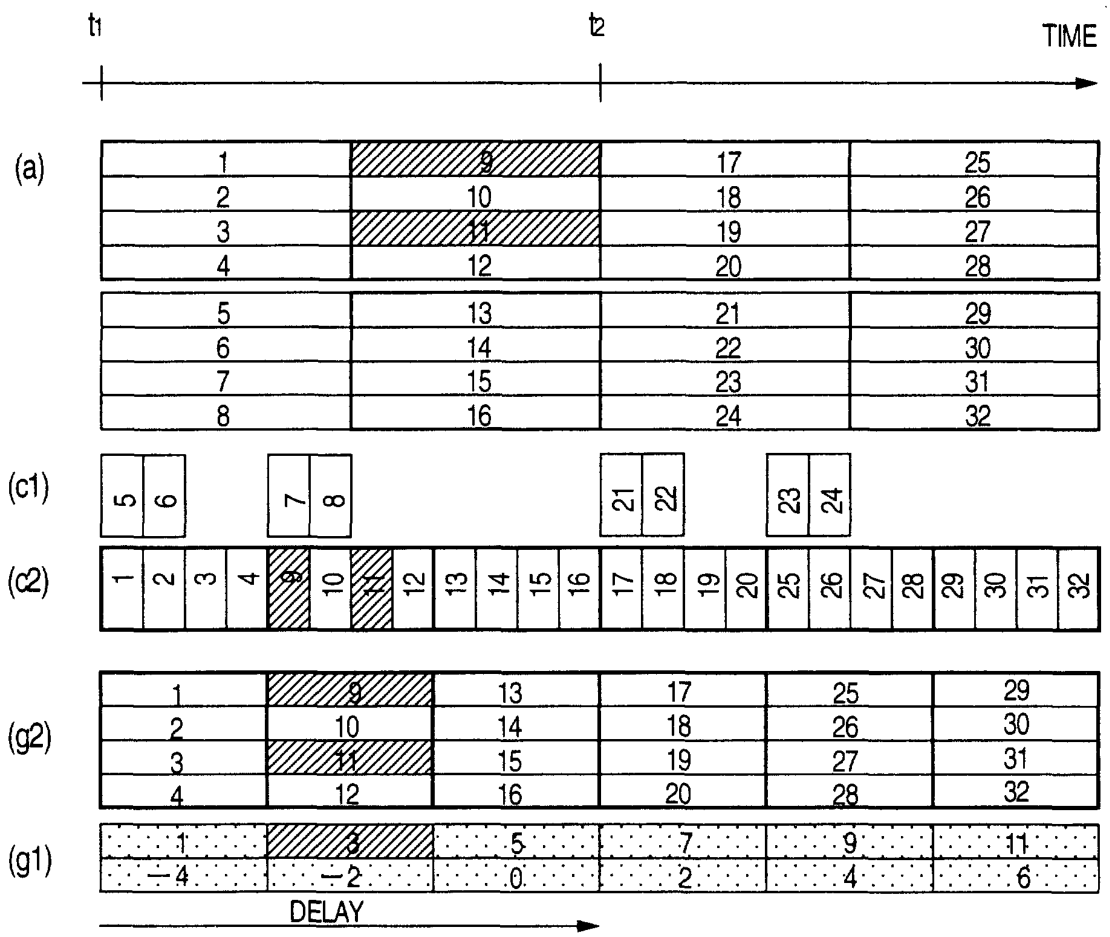
t1
t2
TIME
(a)
1 2 3 4 5 6 7 8
9 10 11 12 13 14 15 16
17 18 19 20 21 22 23 24
25 26 27 28 29 30 31 32
(c1)
5 6 7 8 21 22 23 24
(c2)
1 2 3 4 9 10 11 12 13 14 15 16 17 18 19 20 25 26 27 28 29 30 31 32
(g2)
1 2 3 4
9 10 11 12
13 14 15 16
17 18 19 20
25 26 27 28
29 30 31 32
(g1)
1 3 5 7 9 11
−4 −2 0 2 4 6
DELAY

FIG.16

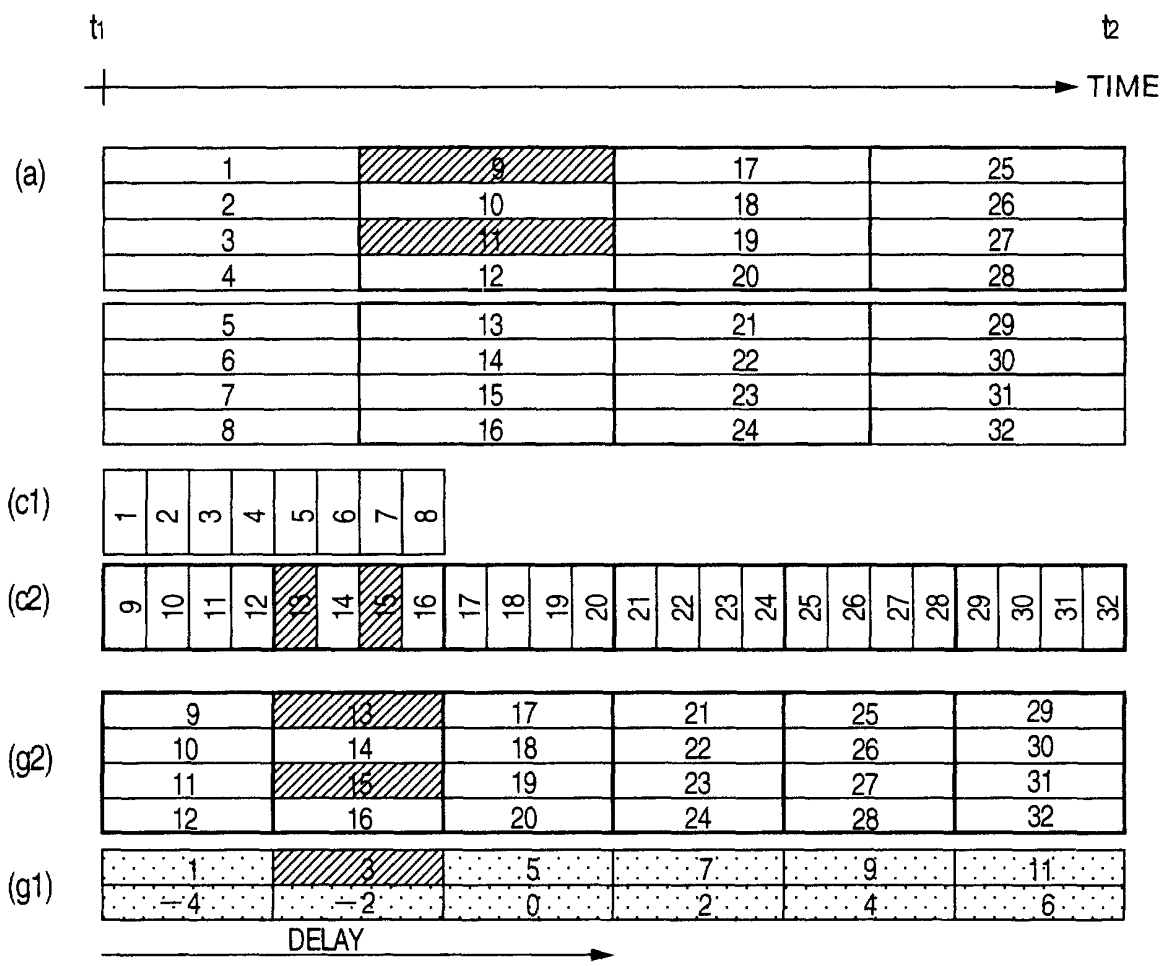
t1
t2
TIME
(a)
1
9
17
25
2
10
18
26
3
11
19
27
4
12
20
28
5
13
21
29
6
14
22
30
7
15
23
31
8
16
24
32
(c1)
1 2 3 4 5 6 7 8
(c2)
9 10 11 12 13 14 15 16 17 18 19 20 21 22 23 24 25 26 27 28 29 30 31 32
(g2)
9
13
17
21
25
29
10
14
18
22
26
30
11
15
19
23
27
31
12
16
20
24
28
32
(g1)
1
3
5
7
9
11
−4
−2
0
2
4
6
DELAY

FIG.17

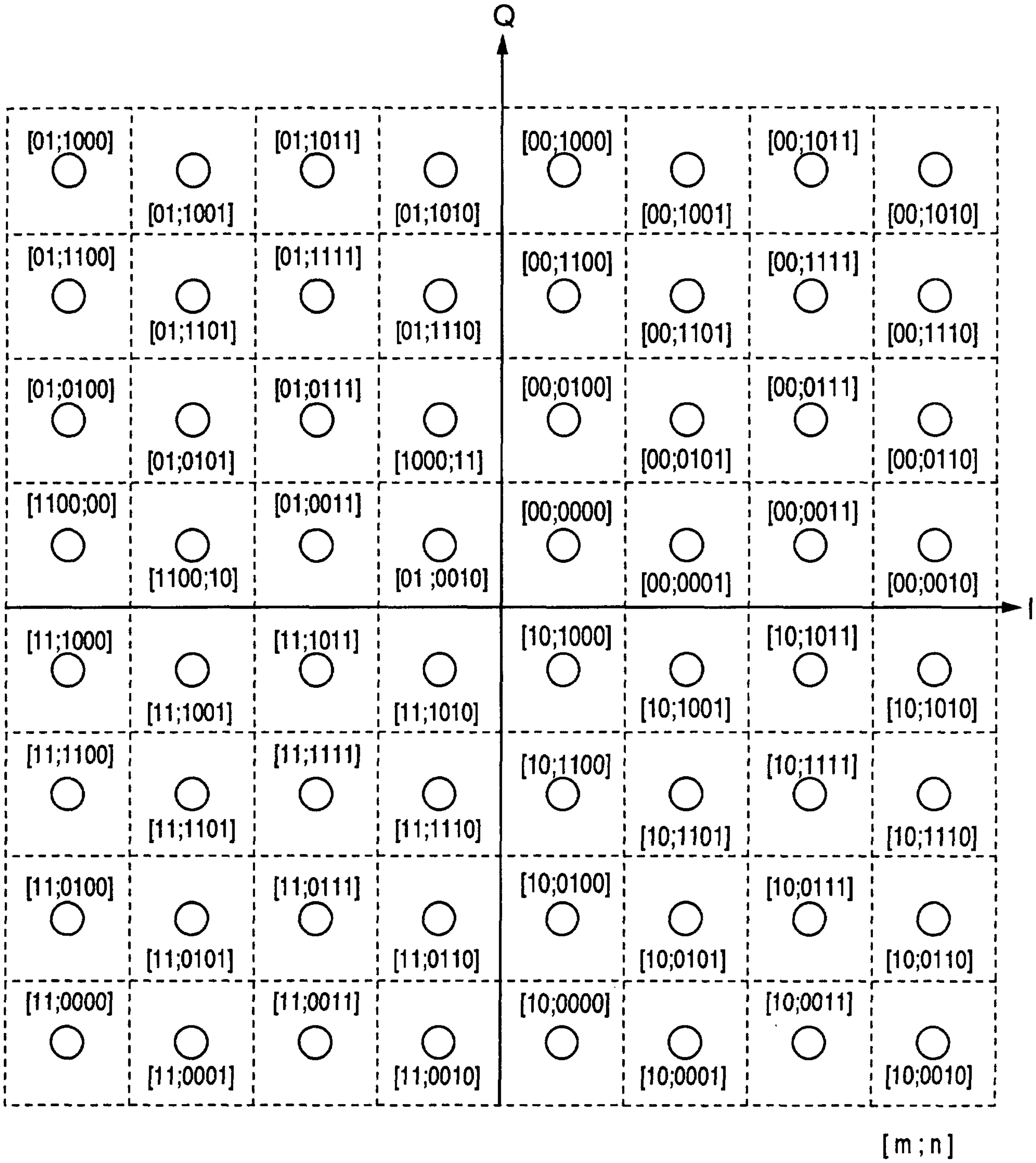
Q
I
[01;1000]
[01;1001]
[01;1011]
[01;1010]
[00;1000]
[00;1001]
[00;1011]
[00;1010]
[01;1100]
[01;1101]
[01;1111]
[01;1110]
[00;1100]
[00;1101]
[00;1111]
[00;1110]
[01;0100]
[01;0101]
[01;0111]
[1000;11]
[00;0100]
[00;0101]
[00;0111]
[00;0110]
[1100;00]
[1100;10]
[01;0011]
[01 ;0010]
[00;0000]
[00;0001]
[00;0011]
[00;0010]
[11;1000]
[11;1001]
[11;1011]
[11;1010]
[10;1000]
[10;1001]
[10;1011]
[10;1010]
[11;1100]
[11;1101]
[11;1111]
[11;1110]
[10;1100]
[10;1101]
[10;1111]
[10;1110]
[11;0100]
[11;0101]
[11;0111]
[11;0110]
[10;0100]
[10;0101]
[10;0111]
[10;0110]
[11;0000]
[11;0001]
[11;0011]
[11;0010]
[10;0000]
[10;0001]
[10;0011]
[10;0010]
[m;n]

FIG.18

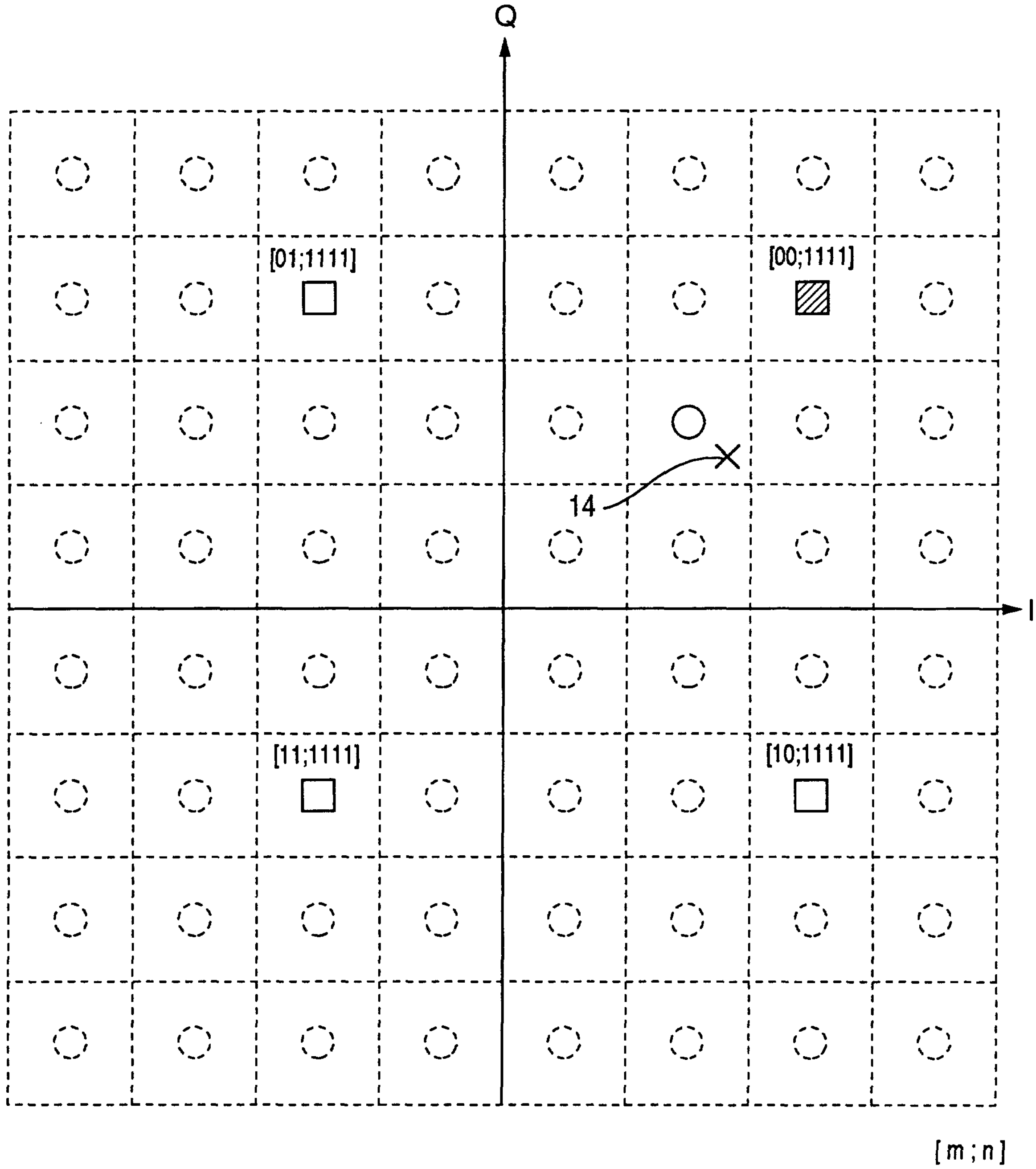

FIG.19

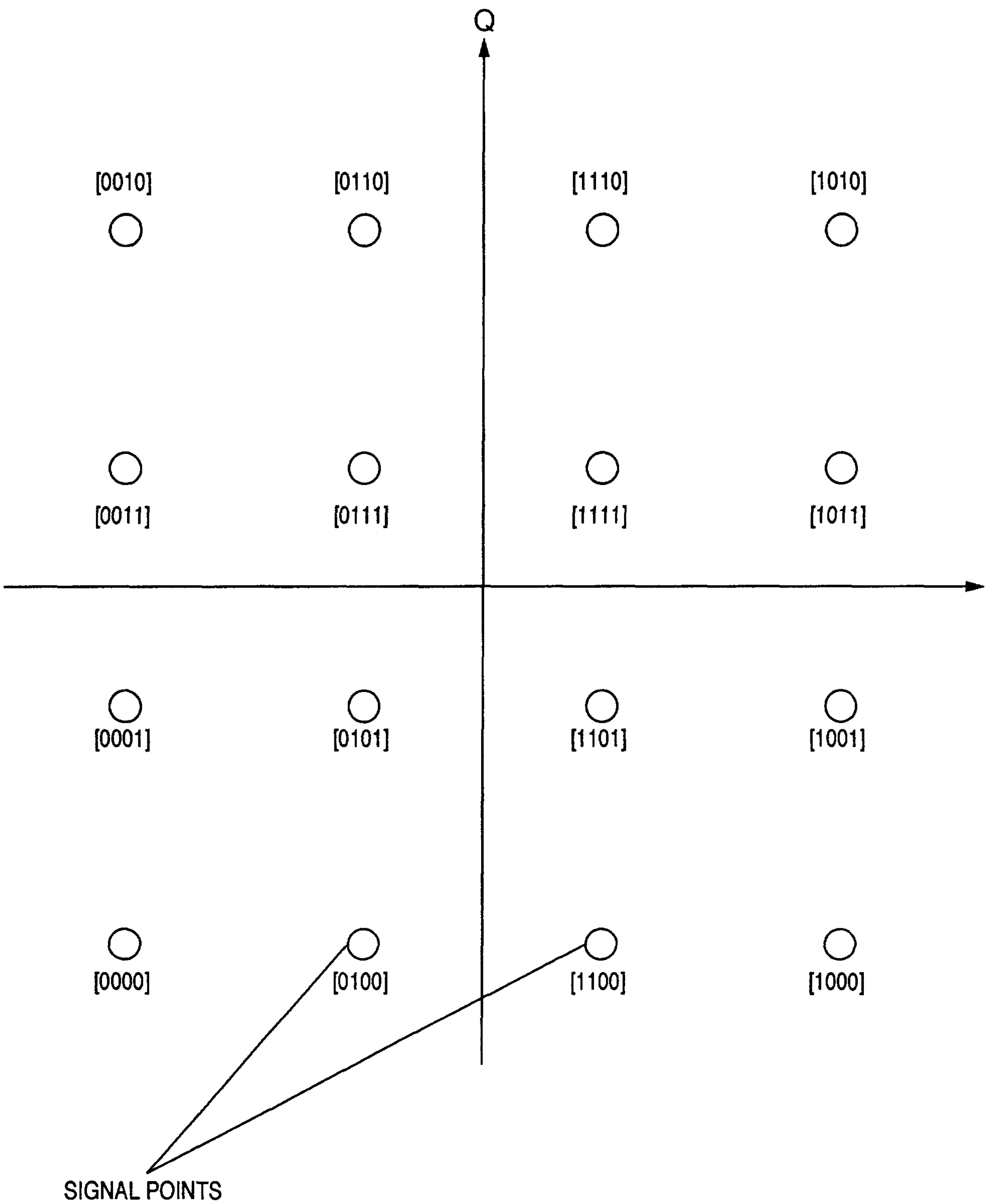
Q
I
[0010]
[0110]
[1110]
[1010]
[0011]
[0111]
[1111]
[1011]
[0001]
[0101]
[1101]
[1001]
[0000]
[0100]
[1100]
[1000]
SIGNAL POINTS

FIG.20

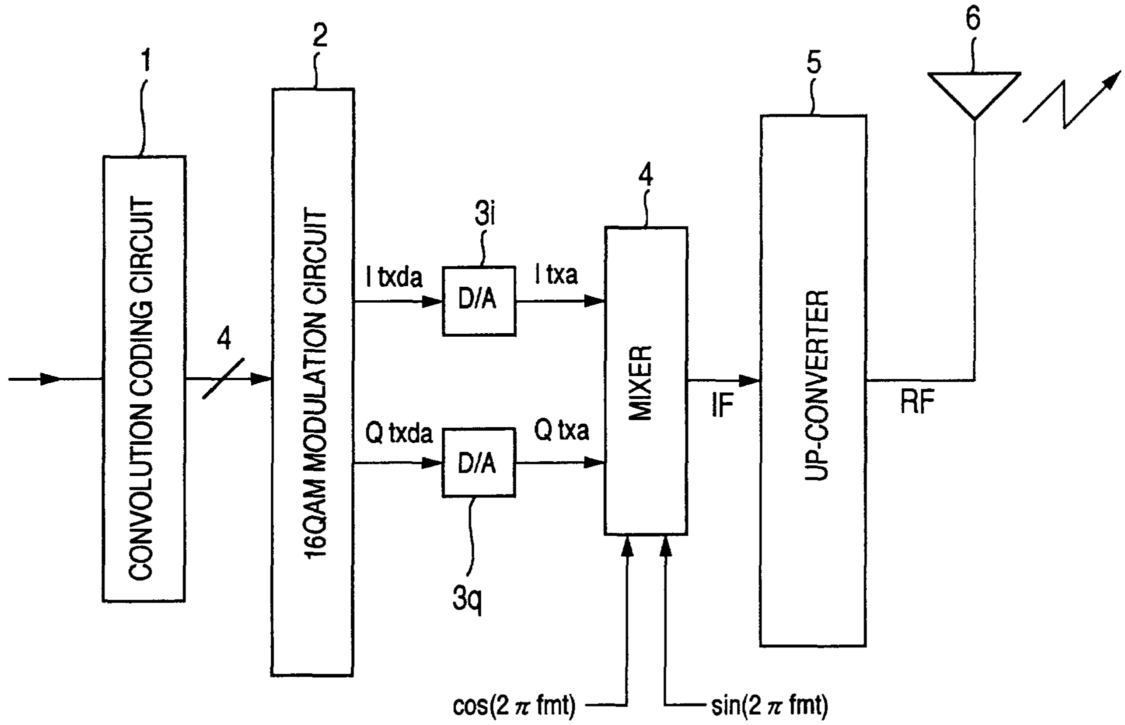
1
CONVOLUTION CODING CIRCUIT
4
2
16QAM MODULATION CIRCUIT
I txda
Q txda
3i
D/A
D/A
3q
I txa
Q txa
4
MIXER
cos(2 π fmt)
sin(2 π fmt)
IF
5
UP-CONVERTER
RF
6

FIG.21

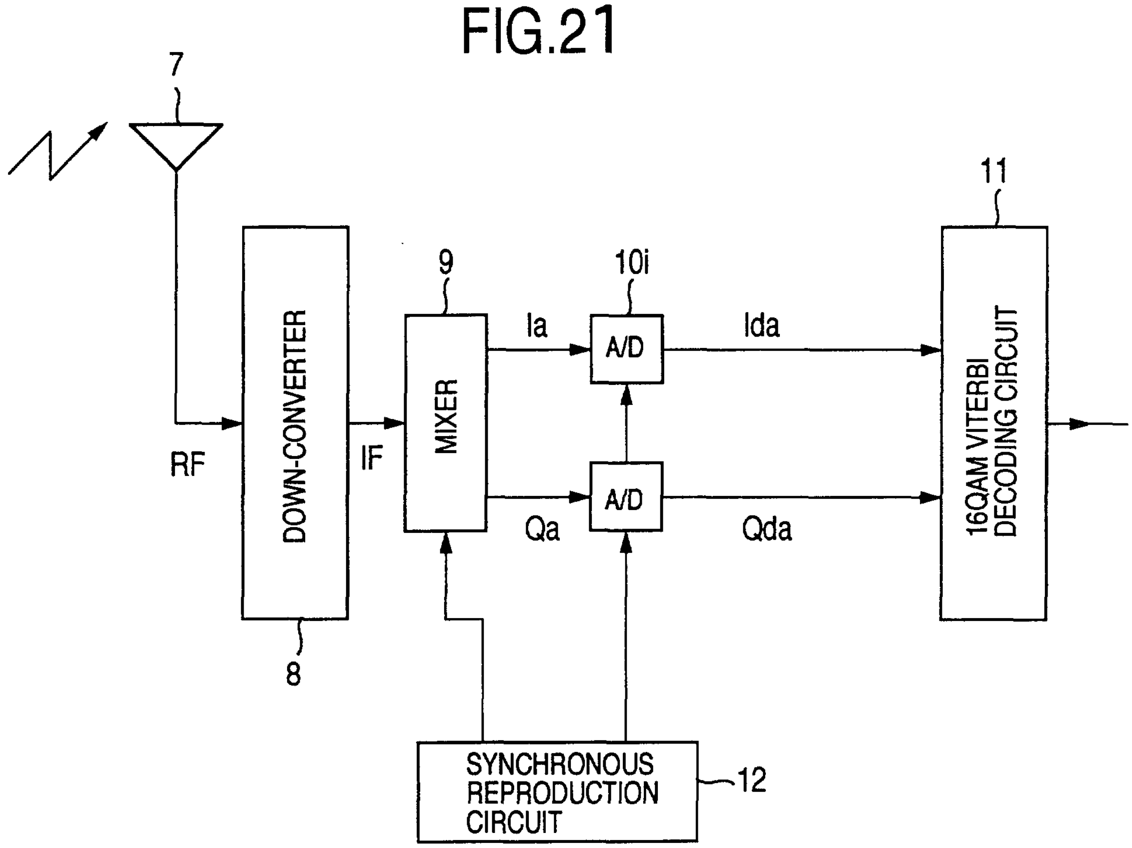
7
RF
DOWN-CONVERTER
8
IF
9
MIXER
Ia
Qa
10i
A/D
A/D
Ida
Qda
11
16QAM VITERBI DECODING CIRCUIT
SYNCHRONOUS REPRODUCTION CIRCUIT
12

FIG.22

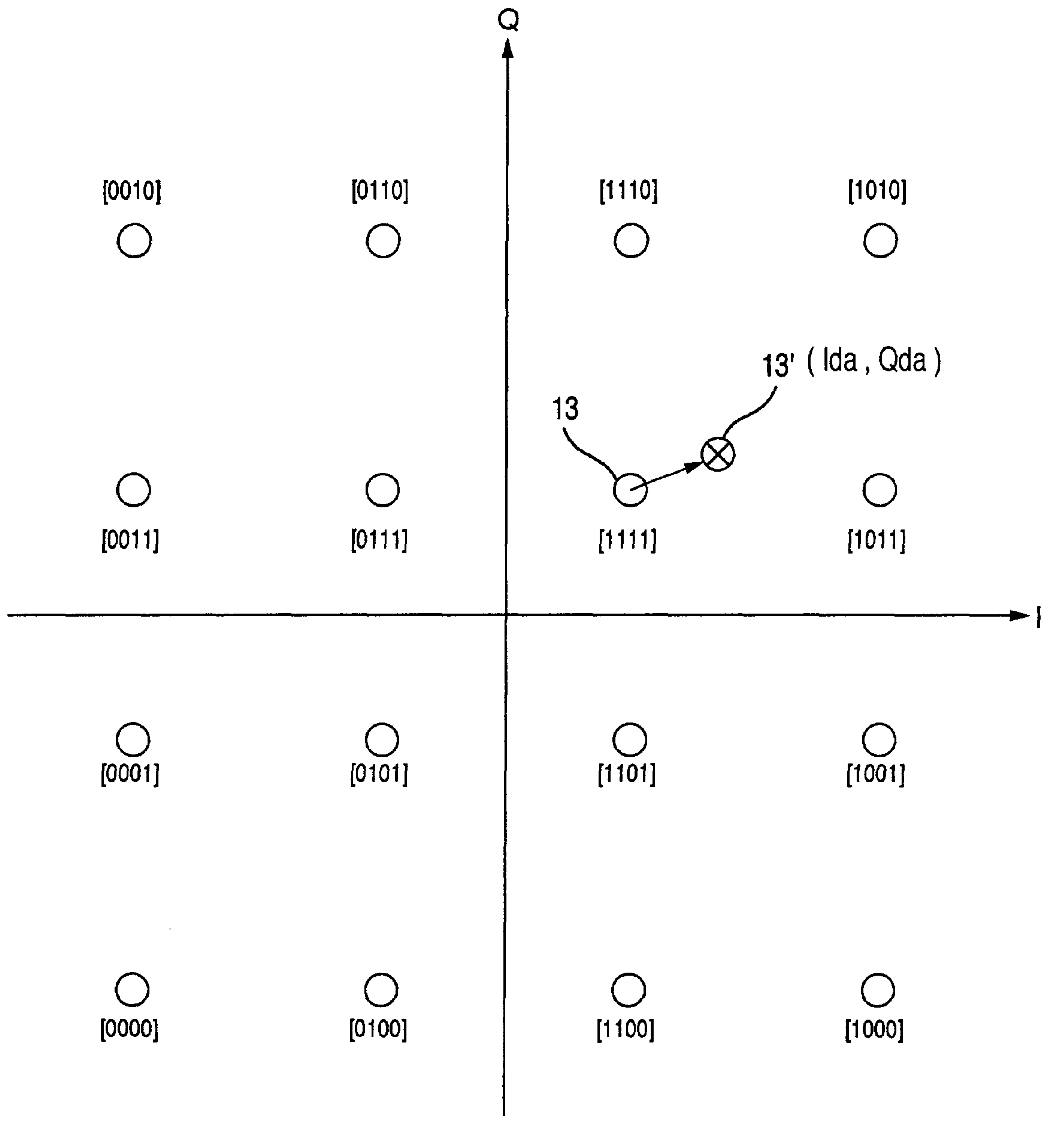
Q
I
[0010]
[0110]
[1110]
[1010]
13' ( Ida , Qda )
13
[0011]
[0111]
[1111]
[1011]
[0001]
[0101]
[1101]
[1001]
[0000]
[0100]
[1100]
[1000]

FIG.23

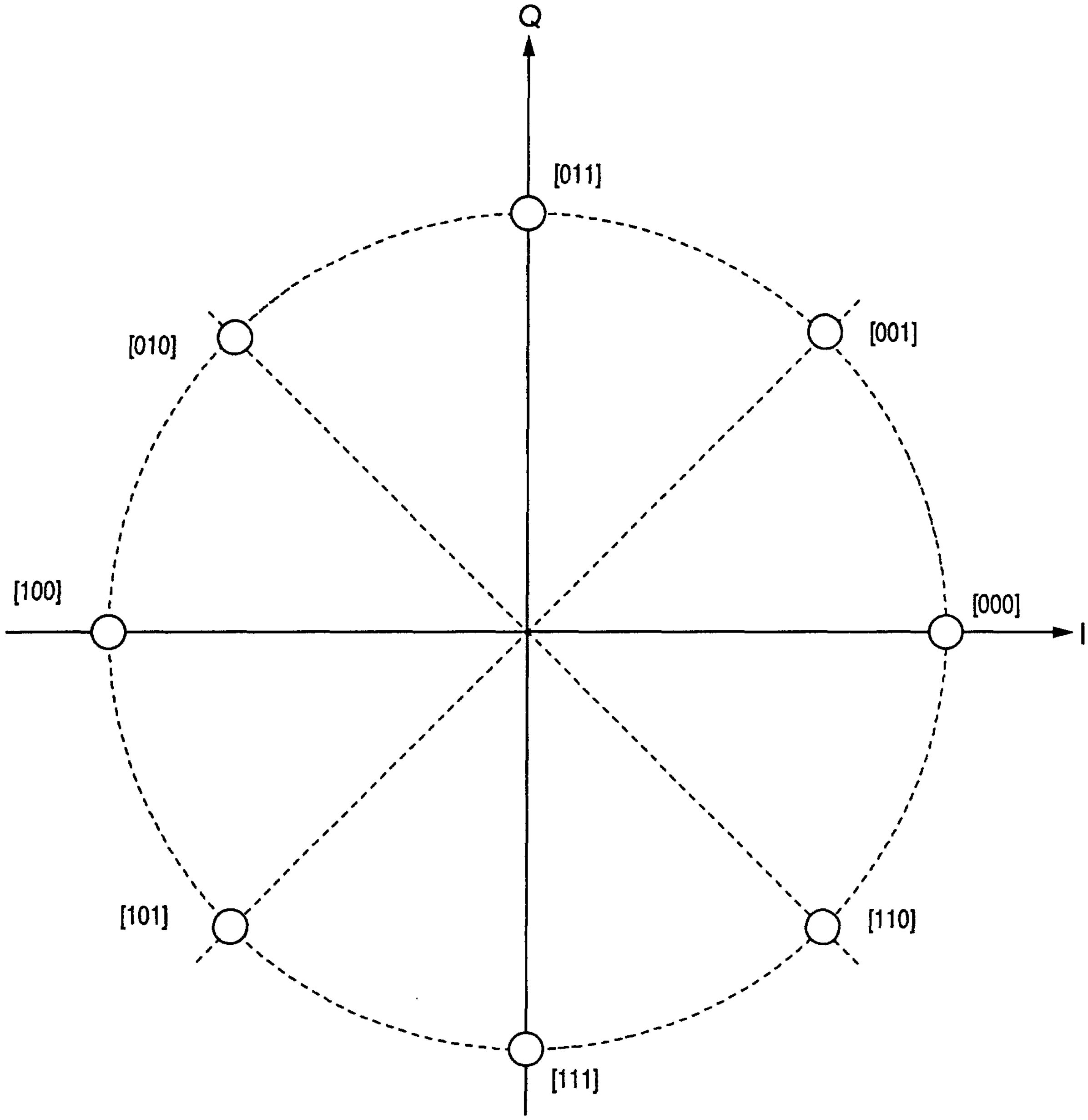

FIG.24

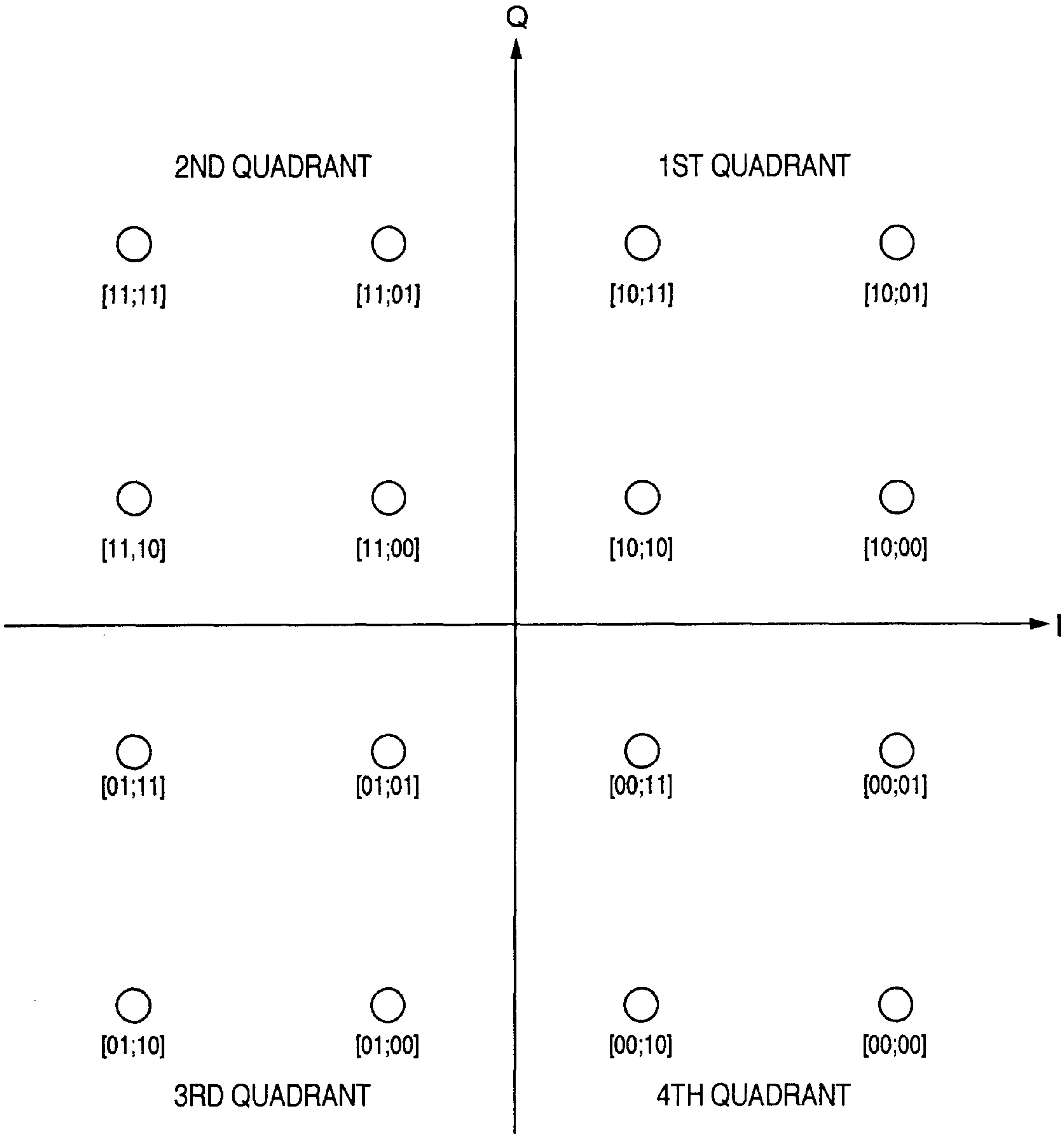
Q
2ND QUADRANT
1ST QUADRANT
[11;11]
[11;01]
[10;11]
[10;01]
[11,10]
[11;00]
[10;10]
[10;00]
I
[01;11]
[01;01]
[00;11]
[00;01]
[01;10]
[01;00]
[00;10]
[00;00]
3RD QUADRANT
4TH QUADRANT